# EUROPEAN PATENT APPLICATION

(11) **EP 4 783 630 A1**
(43) Date of publication of application: **29.07.2026**
(21) Application number: 24884100.9
(22) Date of filing: 07.08.2024
(51) Int. Cl.: H04W 8/22

(54) **COMMUNICATION METHOD, APPARATUS AND SYSTEM**

(30) Priority: 31.10.2023 CN 202311434366
(71) Applicant: HUAWEI TECHNOLOGIES CO., LTD., Shenzhen, Guangdong 518129 (CN)
(72) Inventor: XU, Shengfeng, Shenzhen, Guangdong 518129 (CN)
(74) Representative: Pfenning, Meinig & Partner mbB
(86) International application number: PCT/CN2024/110429
(87) International publication number: WO 2025/092093

(57) **Abstract**

This application relates to a communication method, apparatus, and system. A first core network element determines, based on first information, that a service corresponding to a terminal device is processed locally. Control plane signaling corresponding to the locally processed service is forwarded by a first network element to a local function network element without passing through the first core network element. The first information includes one or more of the following: information about the terminal device, information about the first network element, or information about at least one core network element. The first core network element sends indication information to the first network element, to indicate that the service corresponding to the terminal device is processed locally, or indicate information about the service locally processed by the terminal device. The first core network element may determine, based on the first information, whether the service corresponding to the terminal device is processed locally. Therefore, a method for determining whether the service of the terminal device can be processed locally is provided, so that the service of the terminal device can be processed locally.

## Description

### CROSS-REFERENCE TO RELATED APPLICATIONS

This application claims priority to Chinese Patent Application No. 202311434366.5, filed with the China National Intellectual Property Administration on October 31, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In a 5th generation (5th generation, 5G) system, between a user equipment (user equipment, UE) and an access and mobility management function (access and mobility management function, AMF), a non-access stratum (non-access stratum, NAS) connection is maintained and a mobility management (mobility management, MM) NAS message is transmitted. A (radio) access network ((radio) access network, (R)AN) forwards the MM NAS message between the UE and the AMF. If the UE has a NAS request of another type, for example, a NAS-session management (session management, SM), short message service (short message service, SMS), UE policy (policy), or location service (location service, LCS) request, the UE places the corresponding request in the MM NAS message. After receiving the MM NAS message, the AMF parses out the corresponding request, and then sends the request to a corresponding network function (network function, NF).

The foregoing describes a public network communication scenario, while in a private network or campus scenario, some NFs may be deployed in a private network or a campus, and a service of a UE may be processed in the private network or the campus. However, whether a service of a UE can be processed locally cannot be determined currently.

### SUMMARY

Embodiments of this application provide a communication method, apparatus, and system, to provide a mechanism in which a service of a terminal device can be processed locally.

According to a first aspect, a communication method is provided. The method may be performed by a core network element, or may be performed by another device including a function of the core network element, or may be performed by a chip system (or a chip) or another functional module. The chip system or the functional module can implement the function of the core network element, and the chip system or the functional module is, for example, disposed in the core network element. The core network element is, for example, a first core network element. In the following descriptions, for example, the method is performed by the first core network element. Optionally, the first core network element is, for example, an AMF, or another core network element that can implement a similar function. The method includes: determining, based on first information, that a service corresponding to a terminal device is processed locally, where control plane signaling corresponding to the locally processed service is forwarded by a first network element to a local function network element without passing through the first core network element, and the first information includes one or more of the following: information about the terminal device, information about the first network element, or information about at least one core network element; and sending indication information to the first network element, where the indication information indicates that the service corresponding to the terminal device is processed locally, or indicates information about the service locally processed by the terminal device.

In this embodiment of this application, the first core network element may determine, based on the first information, whether the service corresponding to the terminal device is processed locally. Therefore, a method for determining whether the service of the terminal device can be processed locally is provided, so that the service of the terminal device can be processed locally. In addition, if the service of the terminal device is processed locally, the first core network element may further send the indication information to the first network element, so that the first network element can process the service of the terminal device according to a local processing mechanism, thereby implementing the local processing mechanism.

In an optional implementation, the control plane signaling is not an MM NAS message. For example, the control plane signaling is signaling corresponding to a corresponding service, and may be signaling newly defined in embodiments of this application, or may be conventional signaling. It can be learned that the control plane signaling in this embodiment of this application is not an MM NAS message, and does not need to pass through the first core network element. Instead, the first network element directly forwards the control plane signaling to a local function network element, thereby shortening a transmission path of the control plane signaling, and reducing a transmission delay.

In an optional implementation, the service corresponding to the terminal device includes all or a part of services of the terminal device; or a service request from the terminal device is received, and the service corresponding to the terminal device is a service indicated by the service request. For example, the first core network element may determine at a time all services that can be locally processed by the terminal device, or the first core network element may not need to perform determining in advance, but determine, after receiving a service request from the terminal device, whether a service indicated by the service request is processed locally. This manner is flexible.

In an optional implementation, the information about the terminal device includes one or more of the following: capability information of the terminal device in supporting local service processing; a PLMN and/or an NID accessed by the terminal device; or information about a service that the terminal device is allowed to process locally, or information indicating that the terminal device is allowed to process all the services locally. The capability information of the terminal device in supporting local service processing indicates whether the terminal device is capable of processing a service locally. For example, if the first core network element preconfigures an ID of a PLMN in which a service is allowed to be processed locally, the first core network element may determine whether an ID of the PLMN accessed by the terminal device is included in the PLMN ID preconfigured by the first core network element. If the ID of the PLMN accessed by the terminal device is included in the PLMN ID preconfigured by the first core network element, it indicates that the service of the terminal device can be processed locally; otherwise, it indicates that the service of the terminal device cannot be processed locally.

In an optional implementation, the information about the first network element includes information about whether the first network element supports message forwarding to a local function network element. If the first network element supports message (for example, control plane signaling corresponding to a service) forwarding to a local function network element, a service of a terminal device served by the first network element is likely to be processed locally. If the first network element does not support message (for example, control plane signaling corresponding to a service) forwarding to a local function network element, the service of the terminal device served by the first network element may be unlikely to be processed locally.

In an optional implementation, the determining, based on the first information, that the service corresponding to the terminal device is processed locally includes: sending a part of or all the first information to a second core network element; and receiving the indication information from the second core network element. The first core network element may autonomously determine, based on the first information, whether the service corresponding to the terminal device is processed locally. Alternatively, the first core network element may determine, by using another core network element, whether the service corresponding to the terminal device is processed locally.

In an optional implementation, the indication information further indicates a function network element configured to process the locally processed service, and/or an area to which the indication information is applicable. Before forwarding control plane signaling to a local function network element, the first network element needs to first determine a function network element corresponding to a service. The indication information may indicate the function network element corresponding to the service, so that the first network element can forward the control plane signaling.

In an optional implementation, the method further includes: sending policy information to the terminal device. The policy information indicates that the service corresponding to the terminal device is processed locally, or indicates the information about the service locally processed by the terminal device. The first core network element may further send the policy information to the terminal device, so that the terminal device can process a corresponding service according to the local processing mechanism.

In an optional implementation, the policy information further includes information about the function network element configured to process the service locally processed by the terminal device, and/or information about an area to which the policy information is applicable. For example, when sending the control plane signaling to the first network element, the terminal device may further indicate the function network element configured to process the service, so that the first network element does not need to determine the function network element, thereby simplifying a processing process of the first network element.

In an optional implementation, the policy information is generated by the first core network element; or the policy information is from the second core network element. For example, the first core network element autonomously determines, based on the first information, whether the service of the terminal device is processed locally, and the first core network element may generate the policy information based on the first information. For another example, if the first core network element determines, by using the second core network element, whether the service of the terminal device is processed locally, the second core network element may generate the policy information and send the policy information to the first core network element. Optionally, the indication information sent by the first core network element to the first network element may also be generated by the first core network element, or may be from the second core network element.

In an optional implementation, the method further includes: sending the information about the first network element and/or the information about the at least one core network element to the terminal device. The information about the first network element and/or the information about the at least one core network element are/is used by the terminal device to determine whether the service corresponding to the terminal device is processed locally. For example, the first core network element may not determine at a time whether all the services of the terminal device are processed locally, but send information about a corresponding network element to the terminal device, so that when initiating a service, the terminal device first autonomously determines whether the service is processed locally. In this manner, steps performed by the first core network element are reduced.

According to a second aspect, another communication method is provided. The method may be performed by a first network element, or may be performed by another device including a function of the first network element, or may be performed by a chip system (or a chip) or another functional module. The chip system or the functional module can implement the function of the first network element, and the chip system or the functional module is, for example, disposed in the first network element. In the following descriptions, for example, the method is performed by the first network element. The method includes: receiving first indication information from a first core network element, where the first indication information indicates that a service corresponding to a terminal device is processed locally, or indicates information about the service locally processed by the terminal device; receiving a message from the terminal device, where the message includes control plane signaling; and sending the control plane signaling to a local function network element based on the first indication information, where the control plane signaling does not pass through the first core network element, and the control plane signaling corresponds to a locally processed service.

In an optional implementation, the message includes second indication information, and the second indication information is information indicating a service requested by the control plane signaling, or information indicating a type of the control plane signaling, or information indicating a local service. For example, the first network element may query the first indication information (indication information from the first core network element) based on the second indication information, to determine how to forward the control plane signaling.

In an optional implementation, the first indication information further indicates a function network element configured to process the locally processed service, and/or an area to which the first indication information is applicable.

In an optional implementation, the local function network element is determined based on information about the local function network element included in the message; or the local function network element is determined based on the first indication information, and the first indication information further indicates information about the function network element configured to process the locally processed service.

For technical effects brought by the second aspect or the optional implementations, refer to descriptions of the technical effects of the first aspect or corresponding implementations.

According to a third aspect, still another communication method is provided. The method may be performed by a terminal device, or may be performed by another device including a function of the terminal device, or may be performed by a chip system (or a chip) or another functional module. The chip system or the functional module can implement the function of the terminal device, and the chip system or the functional module is, for example, disposed in the terminal device. In the following descriptions, for example, the method is performed by the terminal device. The method includes: sending a message to a first network element. The message includes control plane signaling. The message includes indication information, and the indication information is information indicating a service requested by the control plane signaling, or information indicating a type of the control plane signaling, or information indicating a local service.

In an optional implementation, the method further includes: receiving policy information from a first core network element. The policy information indicates that a service corresponding to the terminal device is processed locally, or indicates information about the service locally processed by the terminal device.

In an optional implementation, the sending the message to the first network element includes: sending the message when determining, based on the policy information, that the service requested by the control plane signaling is processed locally.

In an optional implementation, the method further includes: sending an MM NAS message to the first network element when determining, based on the policy information, that a first service is not processed locally. The MM NAS message includes a service request of the first service.

In an optional implementation, the method further includes: sending a service request to the first network element, where the service request is used to request to locally process the service requested by the control plane signaling; and receiving response information, where the response information indicates that the service requested by the control plane signaling is processed locally.

In an optional implementation, the method further includes: receiving information about the first network element and/or information about at least one core network element from a first core network element. The information about the first network element and/or the information about the at least one core network element are/is used by the terminal device to determine whether a service corresponding to the terminal device is processed locally.

In an optional implementation, the sending the service request to the first network element includes: sending the service request to the first network element based on the information about the first network element and/or the information about the at least one core network element.

In an optional implementation, the policy information further indicates a local function network element configured to process the first service; and the message further includes information indicating the local function network element configured to process the first service.

In an optional implementation, the policy information further indicates an area to which the policy information is applicable, and the sending the message to the first network element includes: sending the message to the first network element when the terminal device is in the area.

For technical effects brought by the third aspect or the optional implementations, refer to descriptions of the technical effects of the first aspect or corresponding implementations, and/or refer to descriptions of the technical effects of the second aspect or corresponding implementations.

According to a fourth aspect, a communication apparatus is provided. The communication apparatus may be the first core network element according to any one of the first aspect to the third aspect. The communication apparatus has a function of the first core network element. The communication apparatus is, for example, the first core network element, a large device including the first core network element, or a functional module, for example, a baseband apparatus or a chip system, in the first core network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

In an optional implementation, the processing unit is configured to perform channel access on an unlicensed frequency band. The transceiver unit (or the sending unit) is configured to send SCI. The SCI includes first information, the first information indicates that at least one of M bits in second-stage SCI is a reserved bit, the M bits are bits used to carry channel occupancy time-sharing information COT-SI, and M is a positive integer.

In an optional implementation, the processing unit is configured to determine, based on first information, that a service corresponding to a terminal device is processed locally. Control plane signaling corresponding to the locally processed service is forwarded by a first network element to a local function network element without passing through the first core network element, and the first information includes one or more of the following: information about the terminal device, information about the first network element, or information about at least one core network element. The transceiver unit (or the sending unit) is configured to send indication information to the first network element. The indication information indicates that the service corresponding to the terminal device is processed locally, or indicates information about the service locally processed by the terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the first core network element according to any one of the first aspect to the third aspect.

According to a fifth aspect, a communication apparatus is provided. The communication apparatus may be the first network element according to any one of the first aspect to the third aspect. The communication apparatus has a function of the first network element. The communication apparatus is, for example, the first network element, a large device including the first network element, or a functional module, for example, a baseband apparatus or a chip system, in the first network element. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the fourth aspect.

In an optional implementation, the transceiver unit (or the receiving unit) is configured to receive first indication information from a first core network element. The first indication information indicates that a service corresponding to a terminal device is processed locally, or indicates information about the service locally processed by the terminal device. The transceiver unit (or the receiving unit) is further configured to receive a message from the terminal device. The message includes control plane signaling. The transceiver unit (or the sending unit) is configured to send the control plane signaling to a local function network element based on the first indication information. The control plane signaling does not pass through the first core network element, and the control plane signaling corresponds to a locally processed service.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the first network element according to any one of the first aspect to the third aspect.

According to a sixth aspect, a communication apparatus is provided. The communication apparatus may be the first terminal device according to any one of the first aspect to the third aspect. The communication apparatus has a function of the first terminal device. The communication apparatus is, for example, the first terminal device, a large device including the first terminal device, or a functional module, for example, a baseband apparatus or a chip system, in the first terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions in the fourth aspect.

In an optional implementation, the transceiver unit (or the sending unit) is configured to send a message to a first network element. The message includes control plane signaling. The message includes indication information, and the indication information is information indicating a service requested by the control plane signaling, or information indicating a type of the control plane signaling, or information indicating a local service.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the first terminal device according to any one of the first aspect to the third aspect.

According to a seventh aspect, a communication apparatus is provided. The communication apparatus may be a first core network element, or may be a chip or a chip system used in the first core network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first core network element in the foregoing aspects.

According to an eighth aspect, a communication apparatus is provided. The communication apparatus may be a first network element, or may be a chip or a chip system used in the first network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first network element in the foregoing aspects.

According to a ninth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to a tenth aspect, a communication system is provided, including a first terminal device and a first network element. The first terminal device is configured to perform the method performed by the first terminal device according to any one of the first aspect to the third aspect. The first network element is configured to perform the method performed by the first network element according to any one of the first aspect to the third aspect. For example, the first terminal device may be implemented by the communication apparatus according to the sixth aspect or the ninth aspect, and the first network element may be implemented by the communication apparatus according to the fifth aspect or the eighth aspect.

Optionally, the communication system further includes a first core network element. The first core network element is configured to perform the method performed by the first core network element according to any one of the first aspect to the third aspect. For example, the first core network element may be implemented by the communication apparatus according to the fourth aspect or the seventh aspect.

According to an eleventh aspect, another communication system is provided, including a first core network element and a first network element. The first core network element is configured to perform the method performed by the first core network element according to any one of the first aspect to the third aspect. The first network element is configured to perform the method performed by the first network element according to any one of the first aspect to the third aspect. For example, the first core network element may be implemented by the communication apparatus according to the fourth aspect or the seventh aspect, and the first network element may be implemented by the communication apparatus according to the fifth aspect or the eighth aspect.

Optionally, the communication system further includes a first terminal device. The first terminal device is configured to perform the method performed by the first terminal device according to any one of the first aspect to the third aspect. For example, the first terminal device may be implemented by the communication apparatus according to the sixth aspect or the ninth aspect.

According to a twelfth aspect, a computer-readable storage medium is provided. The computer-readable storage medium is configured to store a computer program or instructions. When the computer program or the instructions are run, the method performed by the first core network element, the first network element, or the first terminal device in the foregoing aspects is implemented.

According to a thirteenth aspect, a computer program product including instructions is provided. When the computer program product is run on a computer, the method according to the foregoing aspects is implemented.

According to a fourteenth aspect, a chip system is provided, including a processor and an interface. The processor is configured to invoke instructions from the interface and run the instructions, to enable the chip system to implement the method in the foregoing aspects.

### BRIEF DESCRIPTION OF DRAWINGS

FIG. 1 is a diagram of a 5G network architecture;
FIG. 2 is a diagram of message forwarding between a UE and an NF by an AMF;
FIG. 3 is a diagram of an application scenario according to an embodiment of this application;
FIG. 4, FIG. 6, and FIG. 7 are flowcharts of three communication methods according to embodiments of this application;
FIG. 5A and FIG. 5B are diagrams of two implementations of second indication information according to an embodiment of this application;
FIG. 5C is a diagram of forwarding an MM NAS message;
FIG. 5D is a diagram of forwarding a new-type message according to an embodiment of this application;
FIG. 8 is a diagram of an apparatus according to an embodiment of this application; and
FIG. 9 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, unless otherwise specified, a quantity of nouns represents "a singular noun or a plural noun", that is, "one or more"; "at least one" means one or more, and "a plurality of" means two or more; and "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. The expression "at least one of the following items (pieces)" or "one or more of" or a similar expression refers to any combination of these items, including a single item (piece) or any combination of a plurality of items (pieces). For example, at least one of a, b, or c or one or more of a, b, or c, represents a, b, c, a and b, a and c, b and c, or a, b, and c. Each of a, b, or c may be singular or plural.

Ordinal numbers such as "first" and "second" mentioned in embodiments of this application are used to distinguish between a plurality of objects, but are not used to limit sizes, content, an order, a time sequence, priorities, importance, or the like of the plurality of objects. In addition, step numbers in embodiments described in embodiments of this application are merely intended to distinguish between different steps, but are not intended to limit an order of the steps. For example, S401 may be performed before S402, or may be performed after S402, or may be performed with S402 at the same time.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, an in-vehicle device, or a wireless apparatus (for example, a communication module, a modem, or a chip system) disposed in the foregoing device. The terminal device is configured to connect persons, objects, machines, and the like, and may be widely used in various scenarios, including, for example but not limited to, terminal devices in the following scenarios: cellular communication, device-to-device (device-to-device, D2D) communication, V2X, machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, a smart office, a smart wearable, smart transportation, a smart city (smart city), an uncrewed aerial vehicle, and a robot. The terminal device sometimes may be referred to as a UE, a terminal, an access station, a UE station, a remote station, a wireless communication device, a user apparatus, or the like.

In embodiments of this application, a communication apparatus configured to implement a function of the terminal device may be the terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is the terminal device is used to describe the technical solutions provided in embodiments of this application. In addition, for ease of description, an example in which the terminal device is a UE is used for description in embodiments of this application.

(2) A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequently evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a pico base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. For example, in a 5th generation (5th generation, 5G) mobile communication system, the core network device includes an AMF, a session management function (session management function, SMF), a location management function (location management function, LMF), a unified data management (unified data management, UDM), a policy control function (policy control function, PCF), a short message service function (short message service function, SMSF), a user plane function (user plane function, UPF), or the like.

In embodiments of this application, a communication apparatus configured to implement a function of the network device may be the network device, or may be an apparatus that can support the network device in implementing the function, for example, a chip system. The apparatus may be installed in the network device. In the technical solutions provided in embodiments of this application, an example in which the apparatus configured to implement the function of the network device is the network device is used to describe the technical solutions provided in embodiments of this application.

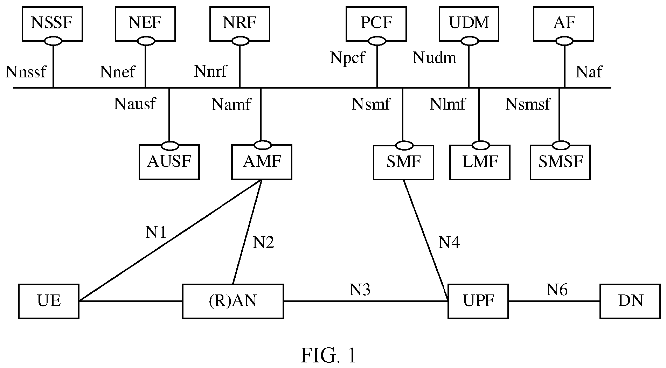

FIG. 1 is a diagram of a 5G network architecture. The network architecture is a network architecture to which an embodiment of this application is applied. FIG. 1 shows interaction relationships between network functions and entities and corresponding interfaces. For example, a UE and an AMF may interact with each other through an N1 interface, and an interaction message is referred to as an N1 message (message). A part of interfaces in FIG. 1 may be implemented by using a service-based interface.

The UE, (R)AN, UPF, and data network (data network, DN) in FIG. 1 are generally referred to as data plane network functions and entities. Data traffic of a user may be transmitted by using a protocol data unit (protocol data unit, PDU) session (session) established between the UE and the DN, and the transmission passes through two network function entities: the (R)AN and the UPF. Other parts in FIG. 1 are referred to as control plane network functions and entities, and are mainly responsible for functionalities such as authentication and authorization, registration management, session management, mobility management, and policy control, to implement reliable and stable transmission of user layer traffic. The user plane is used to carry service data, and the control plane is used to carry signaling messages.

An access network element, for example, the (R)AN, is mainly responsible for functionalities such as radio resource management, quality of service management, and data compression and encryption on an air interface side. The access network device may include various forms of base stations, such as a macro base station, a micro base station, a relay node, and an access point. In systems using different radio access technologies, a device having a function of a base station may have different names. For example, in a 5G system, the device is referred to as a gNB.

The AMF is a core network element, and is mainly responsible for signaling processing, for example, functionalities such as access control, mobility management, registration and deregistration, and gateway selection. When the AMF provides a service for a session of the UE, the AMF provides a control plane storage resource for the session, to store a session identifier, an SMF network element identifier associated with the session identifier, and the like.

The SMF is responsible for user plane network element selection, user plane network element redirection, internet protocol (internet protocol, IP) address allocation, bearer establishment, modification, and release, quality of service (quality of service, QoS) control, and the like.

The LMF is configured to provide a positioning functionality, compute and feed back location information, and provide functionalities such as positioning process management, UE capability acquisition, assistance data provision, and UE location estimation.

The SMSF may provide short message processing functionalities, including short message registration, relay, buffering, routing, and other processing.

The UPF is responsible for receiving and forwarding user data in the UE. The UPF may receive user data from the DN, and transmit the user data to the UE via the access network element. The UPF may further receive user data from the UE via the access network element, and then forward the user data to the DN. Transmission resources and scheduling functionalities in the UPF that provide services for the UE are managed and controlled by the SMF.

The network exposure function (network exposure function, NEF) mainly supports secure interaction between the third-generation partnership project (3rd generation partnership project, 3GPP) network and third-party applications.

The application function (application function, AF) mainly supports interaction with a 3GPP core network to provide a service, for example, affect a data routing decision, provide a policy control functionality, or provide some third-party services for a network side.

The PCF is responsible for making policy control decisions, providing policy rules for control plane functions, and providing traffic-based charging control functionalities.

The network slice selection function (network slice selection function, NSSF) is mainly responsible for network slice selection, and determining, based on slice selection assistance information, subscription information, and the like of the UE, a network slice instance that the UE is allowed to access.

The UDM is mainly responsible for management of subscription data of the UE, including storage and management of a UE identifier, access authorization of the UE, and the like.

The authentication server function (authentication server function, AUSF) supports 3GPP and non-3GPP access authentication.

The network repository function (network repository function, NRF) supports registration and discovery of network functions.

Related interfaces between the network elements/functions in embodiments of this application include:
N1: It is an interface between the UE and the control plane of the core network.
N2: It is a communication interface between the (R)AN and the control plane of the core network.
N3: It is a communication interface between the (R)AN and the UPF, and is configured to transmit user plane data.
N4: It is a communication interface between the SMF and the UPF, and is used by the SMF to perform policy configuration and the like for the UPF.
N6: It is a communication port between the UPF and the DN.

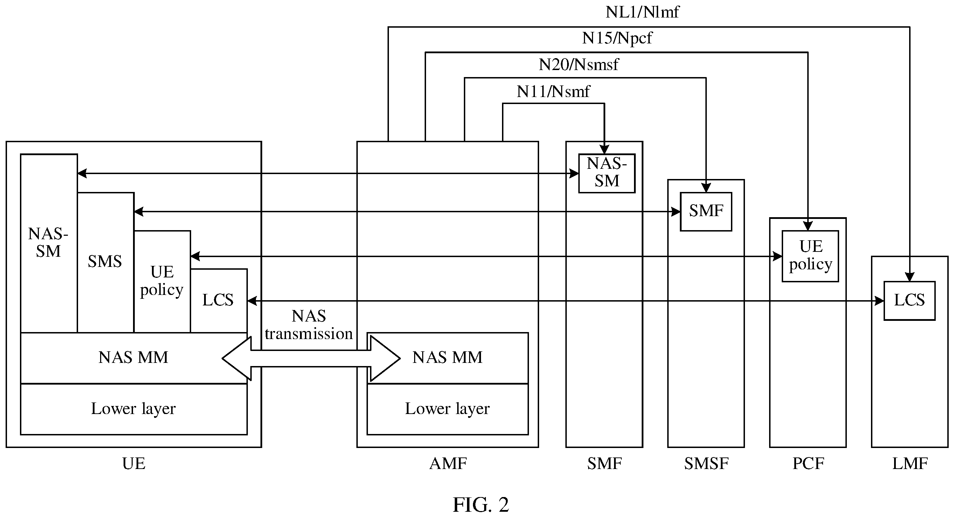

FIG. 1 may be considered as an architecture of a public network. In the 5G system, between the UE and the AMF, a NAS connection is maintained via the (R)AN and an MM NAS message is transmitted. The (R)AN forwards the MM NAS message between the UE and the AMF. The N1 interface (shown in FIG. 1) between the UE and the AMF is a logical interface, rather than an interface of actual connection. The N1 interface is configured to transmit a NAS message, and the NAS message is forwarded by the (R)AN. If the UE has a NAS request of another type, for example, a NAS-SM, SMS, UE policy, or LCS request, the UE places the corresponding request in the MM NAS message and sends the MM NAS message to the (R)AN. The (R)AN sends the MM NAS message to the AMF. After receiving the MM NAS message, the AMF parses out the corresponding request, and then sends the request to a corresponding NF. Refer to FIG. 2. A lower layer (lower layer) in FIG. 2 includes, for example, a physical layer. The NAS-SM request is information/a message between the UE and the SMF, and is used for related PDU session management. If the AMF obtains the NAS-SM request after parsing the MM NAS message, the AMF may send the NAS-SM request to the SMF. For example, the AMF sends the NAS-SM request to the SMF through an N11 interface or a service-based interface Nsmf between the AMF and the SMF. The SMS request is information/a message between the UE and the SMSF, and is used for short message transfer. If the AMF obtains the SMS request after parsing the MM NAS message, the AMF may send the SMS request to the SMSF. For example, the AMF sends the SMS request to the SMSF through an N20 interface or a service-based interface Nsmsf between the AMF and the SMSF. The UE policy request is information/a message between the UE and the PCF, and is used for UE policy transfer. If the AMF obtains the UE policy request after parsing the MM NAS message, the AMF may send the UE policy request to the PCF. For example, the AMF sends the UE policy request to the PCF through an N15 interface or a service-based interface Npcf between the AMF and the PCF. The LCS request is information/a message between the UE and the LMF, and is used for UE location management. If the AMF obtains the LCS request after parsing the MM NAS message, the AMF may send the LCS request to the LMF. For example, the AMF sends the LCS request to the LMF through an NL1 interface or a service-based interface Nlmf between the AMF and the LMF. The NAS-SM, SMS, UE policy, LCS, or other requests placed in the MM NAS message are invisible to the (R)AN. The (R)AN only forwards the MM NAS message between the UE and the AMF.

For example, if the UE initiates a location service, the UE places an LCS request (for example, a mobile originated location request (mobile originated location request, MO-LR Request)) in an MM NAS message and sends the MM NAS message to the (R)AN. The (R)AN forwards the MM NAS message to the AMF by default. After parsing the MM NAS message, the AMF selects the LMF, and then initiates a determine location request (determine location request) to the LMF. The determine location request includes information in the MO-LR Request.

For another example, if the UE initiates a session service, the UE places a session request (for example, a PDU session establishment request (PDU session establishment request)) as an N1 SM container (container) in an MM NAS message and sends the MM NAS message to the (R)AN. The (R)AN forwards the MM NAS message to the AMF by default. After parsing the MM NAS message, the AMF selects the SMF, and then initiates a create session management context request (create SM context request) to the SMF. The create SM context request includes information in the PDU session establishment request.

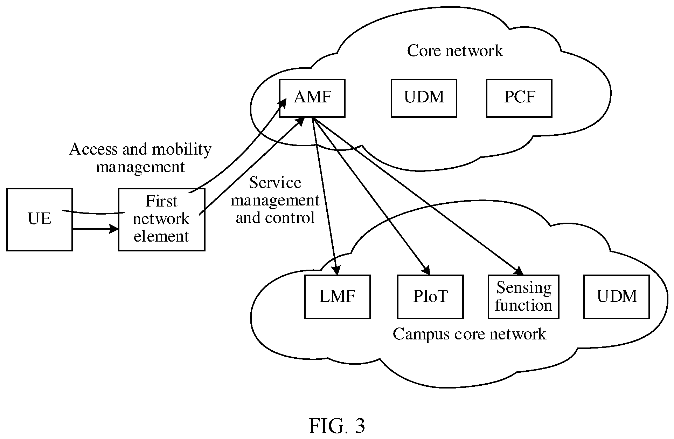

In addition to the public network, there are also private network communication scenarios. For example, a working campus may be considered as a private network. In a private network scenario, some NFs may be deployed in a private network, and a service of a UE may be processed in the private network. FIG. 3 is a diagram of an architecture of a private network. In FIG. 3, a "core network" may be a public network or a "central core network", and a "campus core network" may be a private network. Network elements included in the public network and the private network may be completely different, or may include network elements configured to implement similar functions. It can be learned that in FIG. 3, the public network includes network elements such as an AMF and a UDM, and the private network includes NFs such as an LMF, a sensing function (sensing function, SF), a passive internet of things (passive IoT, PIoT), and a UDM. The LMF is responsible for managing a location service, and the SF is responsible for managing a sensing service. It can be learned that both the public network and the private network include a UDM, and functions of the UDMs in the public network and the private network are similar. For example, the two UDMs are both configured to store subscription information of a UE, and information (for example, the subscription information of the UE) stored in the two UDMs is synchronously consistent. If a request of the UE is transferred to the UDM in the public network, the UDM in the public network processes the request. If the request of the UE is transferred to the UDM in the private network, the UDM in the private network processes the request. In addition, network elements to be deployed in the private network depend on services to be used in the private network. For example, in a factory, if a UE of the factory needs to be positioned, an LMF may be deployed in a private network of the factory. For another example, in a factory, if it is expected to sense an industrial park of the factory, an SF may be deployed in the industrial park (private network). Currently, interaction between a UE and an NF in a private network needs to be forwarded by an AMF. However, whether a service of a UE can be processed in a private network, or which services of a UE can be processed in a private network cannot be determined currently.

In view of this, in embodiments of this application, a first core network element may determine, based on first information, whether a service corresponding to a UE is processed locally. Therefore, a method for determining whether the service of the UE can be processed locally is provided, so that the service of the UE can be processed locally. In addition, if the service of the UE is processed locally, the first core network element may further send indication information to a first network element, so that the first network element can process the service of the UE according to a local processing mechanism, thereby implementing the local processing mechanism. FIG. 3 is used as an example. For example, if the first core network element is the AMF in FIG. 3, the AMF may send the indication information to a first network element in FIG. 3. After receiving the indication information, the first network element may process the service of the UE according to the local processing mechanism. For example, for a service request (for example, a location request) from the UE, the first network element may not need to send the service request to the AMF in the public network, but may directly forward the service request to a corresponding function network element in the private network, for example, send the location request to the LMF. Therefore, a signaling transmission process is reduced, and a transmission delay is reduced.

The following describes, with reference to accompanying drawings, methods provided in embodiments of this application. In embodiments of this specification, concepts such as a "local", a "local network", a "private network", and a "campus core network" have a same meaning, and may be replaced with each other. In embodiments of this specification, a first network element may be used as an independent network element and disposed between an access network element (for example, a (R)AN) and a core network element (for example, an AMF). Alternatively, the first network element may include one or more functional modules (for example, a module configured to implement a control plane signaling forwarding function), and the one or more functional modules may be disposed in the access network element (for example, the (R)AN) or the core network element (for example, the AMF). Alternatively, the first network element is the access network element (for example, the (R)AN) or the core network element (for example, the AMF and/or a control plane signaling forwarding function network element). If the first network element is not the (R)AN, and is not disposed in the (R)AN, in an uplink communication process, a message (for example, control plane signaling) of a UE may be first sent to the (R)AN, forwarded by the (R)AN to the first network element, and then sent by the first network element to the AMF or another NF (for example, an LMF or an SMF). In a downlink communication process, a message (for example, control plane signaling) of a core network (for example, the AMF or another NF) may reach the first network element, and the first network element needs to send a corresponding message to the UE via the (R)AN.

Embodiments of this specification relate to a first core network element and a second core network element. The first core network element is, for example, a network element in a public network and configured to process a service request (for example, a location request or a session request) from the UE. The first core network element is responsible for forwarding the service request from the UE to a corresponding function network element in the public network, for example, forwarding the location request to the LMF. Optionally, the first core network element is, for example, the AMF, or may be another network element that can implement a similar function. The second core network element includes, for example, a network element in the public network and configured to store subscription information or registration information of the UE, or a network element in the public network and responsible for policy control. Optionally, the second core network element is, for example, a UDM or a PCF, or may be another network element that can implement a similar function. In descriptions of the following embodiments, an example in which the first core network element is an AMF and the second core network element is a PCF or a UDM is used.

Embodiments of this specification may be applied to the network architecture shown in FIG. 1 or FIG. 3. For example, the first network element in embodiments of this specification may be the first network element in FIG. 3, the (R)AN in FIG. 1, or a network element disposed between the (R)AN and the AMF in FIG. 1; the UE in embodiments of this specification may be the UE in FIG. 1 or FIG. 3; the AMF in embodiments of this specification may be the AMF in FIG. 1 or FIG. 3; the PCF in embodiments of this specification may be the PCF in FIG. 1 or FIG. 3; the UDM in embodiments of this specification may be the UDM in FIG. 1 or FIG. 3, and if the UDM in embodiments of this specification is a UDM in FIG. 3, the UDM may be the UDM in the public network or the central core network shown in FIG. 3, or may be the UDM in the private network shown in FIG. 3; the second network element in embodiments of this specification may be any NF in FIG. 1, for example, the SMF, or may be an NF not shown in FIG. 1, for example, the LMF; and the third network element in embodiments of this specification may be any NF in FIG. 3, for example, the sensing function, the LMF, or the SMF. In accompanying drawings corresponding to embodiments of this application, all steps represented by dashed lines are optional steps.

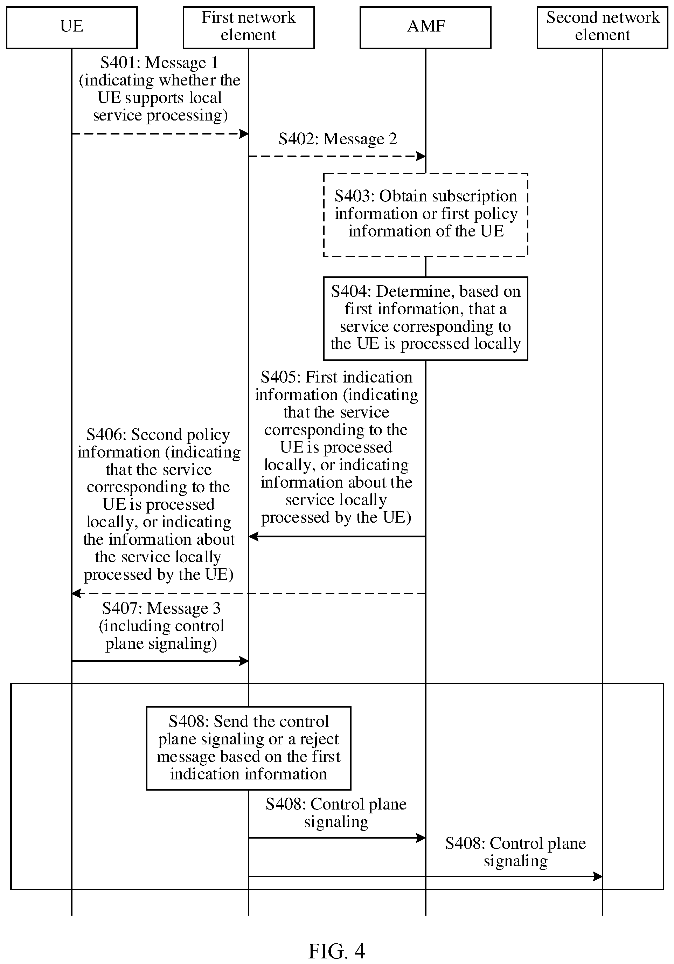

An embodiment of this application provides a first communication method. FIG. 4 is a flowchart of the method.

S401: A UE sends a message 1 to a first network element. Correspondingly, the first network element receives the message 1 from the UE.

The message 1 is, for example, an access network (access network, AN) message. For example, S401 occurs in a registration process of the UE. When the UE requests registration, the UE may send the message 1 to the first network element. The message 1 includes, for example, a registration request (registration request), and may further include an identifier (ID) of a public land mobile network (public land mobile network, PLMN) in which the UE is located, and/or a network identification (network identification, NID) of a network in which the UE is located.

Optionally, the message 1 may further include capability information of the UE. The capability information may indicate whether the UE supports local service processing. For example, the capability information is included in the registration request, or the capability information is included in the message 1 but is not included in the registration request. For example, the capability information may also be referred to as a distributed processing capability, a distributed NAS capability, a capability of generating distributed control plane signaling, a capability of constructing a distributed NAS message, or the like of the UE. A name is not limited.

Optionally, the first network element is an access network element or a control plane signaling forwarding function network element. The control plane signaling forwarding function network element may implement a control plane signaling forwarding function.

S402: The first network element sends a message 2 to an AMF. Correspondingly, the AMF receives the message 2 from the first network element. For example, if the first network element is a (R)AN, the message 2 may be an N2 message.

The message 2 may include one or more of the following: user location information (user location information), the PLMN ID of the UE, the NID of the UE, or the registration request of the UE.

S403: The AMF obtains subscription information or policy information of the UE. For example, the AMF may request to obtain the subscription information or the policy information of the UE from a PCF, or may request to obtain the subscription information or the policy information of the UE from a UDM. To be distinguished from policy information to be described below, the policy information herein may be referred to as first policy information.

The subscription information or the first policy information of the UE may include information about a service that the UE is allowed to process locally. Information about a service may include one or more of an identifier of the service, type information of the service, type information of a message corresponding to the service, or the like. For example, for a location service, information about the location service may include one or more of an identifier of the location service, location type information (that is, type information of the location service), or a location message (that is, type information of a message corresponding to the location service). Alternatively, the subscription information or the first policy information of the UE may include a first local service processing indication corresponding to the UE. The first local service processing indication may indicate that the UE is allowed to process a service locally, or indicate that the UE is allowed to process all services locally. If the subscription information or the first policy information includes the information about the service that the UE is allowed to process locally, a service indicated by the subscription information or the first policy information is the service that the UE is allowed to process locally, and a service not indicated by the subscription information or the first policy information is not allowed to be processed locally. Alternatively, if the subscription information or the first policy information includes the first local service processing indication corresponding to the UE, it indicates that all the services of the UE are allowed to be processed locally.

In this embodiment of this application, if a service is processed locally, when the service is processed, control plane signaling (for example, a NAS message) corresponding to the service may be forwarded by the first network element to a locally deployed function network element (that is, a function network element configured to process the first service), and the control plane signaling does not pass through the AMF. The locally deployed function network element is, for example, a network element deployed in a campus or a private network. That is, in an existing manner, control plane signaling corresponding to a service is forwarded by the (R)AN to the AMF, and then forwarded by the AMF to a corresponding function network element, while in this embodiment of this application, control plane signaling corresponding to a locally processed service may be directly forwarded by the first network element to a function network element without passing through the AMF, thereby reducing a roundabout transmission process of the control plane signaling, and reducing a transmission delay.

Optionally, the subscription information or the first policy information may further include one or more PLMN IDs, and/or one or more NIDs. For example, the one or more PLMN IDs indicate that only when the UE accesses a PLMN indicated by any one of the one or more PLMN IDs, the service that the UE is allowed to process locally can take effect, that is, the service allowed to be processed locally can be processed locally. When a PLMN accessed by the UE is not a PLMN indicated by the one or more PLMN IDs, the service allowed to be processed locally cannot be processed locally. A function of the one or more NIDs is similar thereto.

S404: The AMF determines, based on first information, that a service corresponding to the UE is processed locally. In this embodiment of this application, the service corresponding to the UE may include all or a part of services supported by the UE.

The first information may include one or more of the following: information about the UE, information about the first network element, or information about at least one core network element. For example, the AMF may obtain the first information through one or more of S401 to S403, or may obtain the first information in another manner. Therefore, S401 to S403 are optional steps.

The information about the UE may include one or more of the following: the capability information of the UE, the subscription information or the first policy information of the UE, location information of the UE, the PLMN accessed by the UE, or the NID accessed by the UE.

Optionally, the AMF may obtain the capability information of the UE from the registration request of the UE. The capability information of the UE may indicate whether the UE supports the distributed processing capability, or may further indicate another capability of the UE. The distributed processing capability may also be referred to as the distributed NAS capability, the capability of generating distributed control plane signaling, the capability of constructing a distributed NAS message, or the like. A name is not limited. For example, the capability information of the UE indicates the distributed NAS capability of the UE. If the UE supports the distributed NAS capability, it indicates that the service corresponding to the UE (for example, a part of or all the services corresponding to the UE) can be processed locally. If the UE does not support the distributed NAS capability, it indicates that the service corresponding to the UE (for example, a part of or all the services corresponding to the UE) cannot be processed locally. For example, if the capability information of the UE indicates that the UE does not support the distributed NAS capability, the AMF may determine that all the services corresponding to the UE cannot be processed locally. Alternatively, if the capability information of the UE indicates that the UE supports the distributed NAS capability, the AMF may determine that all the services corresponding to the UE can be processed locally, or the AMF may further determine, with reference to other information included in the first information, whether the service corresponding to the UE can be processed locally.

The information about the UE includes information indicating that the UE is allowed to process all the services locally or information indicating that the UE is allowed to process a service locally. For example, in an implementation, the information about the UE includes a second local service processing indication, and the second local service processing indication may indicate that the UE is allowed to process a service locally, or indicate that the UE is allowed to process all the services locally. If the information about the UE includes information about the service that the UE is allowed to process locally, a service indicated by the information about the UE is the service that the UE is allowed to process locally. The AMF may determine that the service can be processed locally, or may further determine, with reference to other information included in the first information, whether the service can be processed locally. A service not indicated by the information about the UE is not allowed to be processed locally, and the AMF may determine that the service cannot be processed locally. Alternatively, if the information about the UE includes the second local service processing indication corresponding to the UE, it indicates that all the services of the UE are allowed to be processed locally. The AMF may determine that all the services of the UE can be processed locally, or may further determine, with reference to other information included in the first information, which services of the UE can be processed locally, or determine whether a service of the UE can be processed locally.

The information about the UE may include the location information of the UE. For example, the location information of the UE includes an identifier of a cell (cell) that the UE camps on or accesses and/or an identifier of a tracking area (tracking area, TA) that the UE camps on. Optionally, if a service is allowed to be processed locally at a location corresponding to the location information of the UE (for example, the location of the UE is in a campus), the AMF may determine that the service of the UE can be processed locally when the UE is at the location. If a service is not allowed to be processed locally at the location corresponding to the location information of the UE (for example, the location of the UE is outside the campus), the AMF may determine that the service of the UE cannot be processed locally when the UE is at the location.

If the first information includes the subscription information or the first policy information of the UE, the AMF may determine, with reference to the subscription information or the first policy information, whether the service of the UE can be processed locally. For example, if the subscription information or the first policy information indicates that the UE is allowed to process a service locally, the AMF may determine that all the services of the UE can be processed locally, or the AMF may further determine, with reference to other information included in the first information, whether the service corresponding to the UE can be processed locally, or determine which services corresponding to the UE can be processed locally. For another example, if the subscription information or the first policy information indicates the information about the service that the UE is allowed to process locally, the AMF may determine that the service of the UE can be processed locally, or the AMF may further determine, with reference to other information included in the first information, whether the service corresponding to the UE can be processed locally.

If the first information includes the ID of the PLMN accessed by the UE, the AMF may determine, with reference to the PLMN ID, whether the service of the UE can be processed locally. For example, the subscription information or the first policy information of the UE includes one or more PLMN IDs, or the AMF locally preconfigures an ID of one or more PLMNs in which a service is allowed to be processed locally. In this case, if the ID of the PLMN accessed by the UE is included in the one or more PLMN IDs, or a service is allowed to be processed locally in a PLMN to which the AMF belongs, the AMF may determine that the service of the UE can be processed locally, or the AMF may further determine, with reference to other information included in the first information, whether the service of the UE can be processed locally. Alternatively, if the ID of the PLMN accessed by the UE is not included in the one or more PLMN IDs, the AMF may determine that the service of the UE cannot be processed locally.

Alternatively, the AMF locally preconfigures that a service is allowed to be processed locally in the PLMN to which the AMF belongs. In this case, if the PLMN accessed by the UE is the PLMN to which the AMF belongs, the AMF may determine that the service of the UE can be processed locally, or the AMF may further determine, with reference to other information included in the first information, whether the service of the UE can be processed locally. Alternatively, if the PLMN accessed by the UE is not the PLMN to which the AMF belongs, the AMF may determine that the service of the UE cannot be processed locally.

For the NID accessed by the UE that is included in the first information, a manner in which the AMF uses the NID is similar to that of the PLMN ID.

The information about the first network element includes, for example, information about whether the first network element supports message (the message is, for example, control plane signaling from the UE, and the control plane signaling corresponds to a corresponding service) forwarding to a local function network element, information about whether the first network element supports distributed forwarding of a NAS message, or information about whether the first network element supports distributed forwarding of control plane signaling. For example, if a local processing mechanism is used for a service, control plane signaling corresponding to the service is forwarded to a corresponding function network element (for example, a core network element in the at least one core network element) by the first network element, rather than forwarded to the function network element by the AMF. Therefore, the first network element needs to support forwarding, to the local function network element, of the control plane signaling corresponding to the service, so that the local processing mechanism can be implemented. For example, if the information about the first network element indicates that the first network element supports message forwarding to a local function network element, the AMF may determine that the service of the UE can be processed locally, or may further determine, with reference to other information included in the first information, whether the service of the UE can be processed locally. Alternatively, if the information about the first network element indicates that the first network element does not support message forwarding to a local function network element, the AMF may determine that the service of the UE cannot be processed locally.

The at least one core network element includes, for example, a locally disposed function network element configured to process a service, for example, a local network element such as an LMF, an SMF, or a sensing function. For example, information about a core network element may include an identifier of the core network element and capability information of the core network element. Capability information of a core network element may indicate whether the core network element supports the local processing mechanism, whether the core network element supports receiving of control plane signaling from the first network element, or whether the core network element supports local service processing. For example, if the local processing mechanism is used for a service, control plane signaling corresponding to the service is forwarded to a local function network element (for example, a core network element in the at least one core network element, or a function network element deployed in a campus and configured to process the service) by the first network element, rather than forwarded to the function network element by the AMF. Therefore, information about the function network element may indicate whether the function network element supports receiving of control plane signaling from the first network element, whether the function network element supports the local processing mechanism, or whether the function network element supports local service processing. Optionally, information about a core network element may further indicate whether the core network element is deployed in a specific area, or indicate a deployment location of the core network element. For example, for a core network element A configured to process a service A, if the information about the core network element indicates that the core network element A is deployed in an area (for example, a cell or a tracking area) corresponding to the location information of the UE, the AMF determines that the service A corresponding to the UE can be processed locally. Alternatively, if the information about the core network element indicates that the core network element A is not deployed in the area (for example, the cell or the tracking area) corresponding to the location information of the UE, the AMF may determine that the service A corresponding to the UE cannot be processed locally. Optionally, the information about the at least one core network element may be replaced with core network capability information. The core network capability information may indicate whether the core network supports the local processing mechanism, distributed NAS message processing, distributed control plane signaling processing, or the like. Alternatively, the core network capability information may indicate services for which the core network supports the local processing mechanism, services for which the core network supports distributed NAS message processing, services for which the core network supports distributed control plane signaling processing, or the like. If the core network supports the local processing mechanism, the distributed NAS message processing, or the distributed control plane signaling processing, it indicates that the core network supports local processing for various services (for example, including a part of or all services supported by the core network). For example, if the core network supports the local processing mechanism or the core network supports a mechanism of processing the location service locally, the AMF may determine that the location service corresponding to the UE is processed locally. Alternatively, if the core network does not support the local processing mechanism or the core network does not support the mechanism of processing the location service locally, the AMF may determine that the location service corresponding to the UE cannot be processed locally.

For example, the subscription information of the UE indicates that the UE is allowed to process a service locally, the capability information of the UE indicates information about services (including a service A and a service B) for which the UE supports local processing, the information about the first network element indicates that the first network element supports message forwarding to a local function network element, and the core network capability information indicates that the core network supports local processing of the service A but does not support local processing of the service B. Then, the AMF may determine, with reference to the foregoing information, that the service A of the UE can be processed locally, but the service B cannot be processed locally.

Optionally, the AMF may autonomously perform S404, that is, the AMF autonomously determines, based on the first information, that a part of or all the services corresponding to the UE are processed locally, or all the services of the UE cannot be processed locally, so that an interaction process between network elements can be reduced. Alternatively, the AMF may perform S404 by using another network element. For example, the AMF may send a part of or all the first information to the PCF. After receiving the part of or all the first information, the PCF may determine, based on the part of or all the first information, that a part of or all the services corresponding to the UE are processed locally, or all the services of the UE cannot be processed locally. The PCF may obtain, based on the determining process, first indication information to be described in the following S405 (the determining process may be similar to the determining process of the AMF), and send the first indication information to the AMF. In this case, the AMF does not need to autonomously determine whether the service corresponding to the UE is processed locally, so that implementation of the AMF can be simplified.

If the AMF determines, by using the PCF, whether the service of the UE is processed locally, S403 may not be performed. In this case, the information sent by the AMF to the PCF may not include the subscription information or the first policy information of the UE, because the PCF already has the information. In addition, if the first information further includes information obtained by the AMF from the PCF, the AMF may neither need to obtain the information from the PCF, nor need to send the information to the PCF. For example, the AMF may send information (for example, a part of or all the first information) obtained by the AMF to the PCF, and the PCF determines whether the service of the UE is processed locally.

In S404, the AMF may determine, based on the first information, that a part of or all the services corresponding to the UE are processed locally, or all the services of the UE cannot be processed locally. This embodiment of this application mainly discusses a case in which a part of or all the services corresponding to the UE are processed locally.

If all the services of the UE can be processed locally, or a part of services corresponding to the UE can be processed locally, optionally, the AMF may further determine a function network element configured to process the service locally. The function network element is a local function network element. For example, the AMF may determine, based on the location information of the UE, for example, the identifier of the cell that the UE camps on or accesses and/or the identifier of the tracking area that the UE camps on, a function network element corresponding to the location information of the UE, that is, determine a function network element that can process a service of a UE having the location information. A correspondence between the location information and the function network element may be preconfigured in the AMF. Alternatively, the AMF may query another network element (for example, an NRF) for the corresponding function network element. For example, the AMF sends the location information of the UE to an NRF, and the NRF may return, to the AMF, the function network element corresponding to the location information.

S405: The AMF sends indication information to the first network element. Correspondingly, the first network element receives the indication information from the AMF. The indication information may also be referred to as second information, a forwarding rule, a local processing rule, a NAS forwarding rule, or a control plane signaling forwarding rule, or may have another name. To be distinguished from other indication information that appears below, the indication information herein is referred to as first indication information.

The first indication information may indicate that the service corresponding to the UE is processed locally (or indicate that all the services corresponding to the UE are processed locally), or indicate the information about the service locally processed by the UE, or indicate that control plane signaling of the service corresponding to the UE is forwarded by the first network element to a local function network element, or indicate that control plane signaling of all the services corresponding to the UE is forwarded by the first network element to a local function network element, or indicate the information about the service corresponding to the UE and indicate that the control plane signaling of the service is forwarded by the first network element to the local function network element. In the following descriptions, for example, the first indication information indicates that the service corresponding to the UE is processed locally (or indicates that all the services corresponding to the UE are processed locally), or indicates the information about the service locally processed by the UE. If the first indication information indicates that the service corresponding to the UE is processed locally (or indicates that all the services corresponding to the UE are processed locally), in an indication manner, for example, the first indication information includes a third local service processing indication. The third local service processing indication may indicate that the UE is allowed to process a service locally, or indicate that the UE is allowed to process all the services locally. Alternatively, if the first indication information indicates the information about the service locally processed by the UE, in an indication manner, the first indication information may include the information about the service that the UE is allowed to process locally. For content included in the information about the service, refer to the foregoing descriptions.

For example, the first indication information may include a mapping relationship between an identifier of the UE and a forwarding rule corresponding to the UE. The forwarding rule may indicate that the service is processed locally (or indicate that all the services are processed locally), or indicate the information about the locally processed service. The identifier of the UE may indicate the UE. Therefore, the mapping relationship is equivalent to indicating that the service corresponding to the UE is processed locally (or indicating that all the services corresponding to the UE are processed locally), or indicating the information about the service locally processed by the UE. The identifier of the UE is, for example, an ID of the UE. The identifier of the UE may be a temporary identifier allocated by the AMF or the first network element to the UE, for example, an AMF UE next-generation application protocol (next-generation application protocol, NGAP) ID or a RAN UE NGAP ID. For example, Table 1a and Table 1b show two examples of the first indication information.

**Table 1a**

| UE identifier | Service type |
|---|---|
| | Location service |
| 1 | Sensing service |
| | Specific slice or specific data network name (data network name, DNN) service |

**Table 1b**

| UE identifier | Service type | Whether the service is processed locally |
|---|---|---|
| | Location service | Yes |
| 1 | Sensing service | Yes |
| | Specific slice or specific DNN service | No |

Table 1a does not include the option of "whether the service is processed locally", indicating that local processing is supported for all the services in Table 1a. In this case, it can be learned, based on the first indication information shown in Table 1a, that the location service, the sensing service, and the specific slice or specific DNN service of the UE 1 can be processed locally. If the UE 1 further corresponds to another service other than the location service, the sensing service, and the specific slice or specific DNN service, the another service cannot be processed locally.

Table 1b includes the option of "whether the service is processed locally". It can be learned, based on the first indication information shown in Table 1b, that the location service and the sensing service of the UE 1 can be processed locally, but the specific slice or specific DNN service of the UE 1 cannot be processed locally.

Optionally, the first indication information may include one mapping relationship, and the mapping relationship is a mapping relationship between an identifier of one UE and a forwarding rule corresponding to the UE. Alternatively, the first indication information may include a plurality of mapping relationships, and each mapping relationship is a mapping relationship between one UE and a forwarding rule corresponding to the UE, which is equivalent to that forwarding rules of a plurality of UEs may be indicated by using one piece of first indication information. This is not limited herein. For example, in this embodiment of this application, the registration process of the UE is used as an example. However, a reason that the AMF performs the foregoing steps such as S403, S404, and S405 may not be registration of the UE. For example, for one or more UEs that have registered with the AMF, the AMF may actively perform the foregoing steps such as S403, S404, and S405. In this scenario, the first indication information may indicate a forwarding rule of the one or more UEs. For example, subscription information of a plurality of UEs that have registered with the AMF changes. For example, if services corresponding to the plurality of UEs change from local processing not allowed to local processing allowed, the AMF may actively perform the foregoing steps such as S403, S404, and S405. In this case, the first indication information may indicate forwarding rules of the plurality of UEs. In this embodiment of this application, an example in which the mapping relationship includes one mapping relationship is used for description.

Optionally, the AMF sends the first indication information to the first network element by using an N2 message. The N2 message may include the identifier of the UE and the first indication information, and the identifier of the UE may be the temporary identifier allocated by the AMF or the first network element to the UE, for example, the AMF UE NGAP ID or the RAN UE NGAP ID. The N2 message is, for example, an initial context setup request (initial context setup request) message. For example, Table 1c and Table 1d show another two examples of the first indication information. In the two examples, the identifier of the UE is included in the N2 message and is not included in the first indication information. Therefore, different from Table 1a and Table 1b, neither of the first indication information shown in Table 1c and Table 1d includes the identifier of the UE.

**Table 1c**

| Type of the service allowed to be processed locally |
|---|
| Location service |
| Sensing service |
| Specific slice or specific data network name (data network name, DNN) service |

**Table 1d**

| Service type | Whether the service is processed locally |
|---|---|
| Location service | Yes |
| Sensing service | Yes |
| Specific slice or specific data network name (data network name, DNN) service | No |

Table 1c does not include the option of "whether the service is processed locally", which may indicate that local processing is supported for all the services in Table 1c. In this case, it can be learned, based on the first indication information shown in Table 1c, that all the location service, the sensing service, and the specific slice or specific DNN service of the UE 1 can be processed locally. If the UE 1 further corresponds to another service in addition to the location service, the sensing service, and the specific slice or specific DNN service, the another service cannot be processed locally.

Table 1d includes the option of "whether the service is processed locally". In this case, it can be learned, based on the first indication information shown in Table 1d, that the location service and the sensing service of the UE 1 can be processed locally, but the specific slice or specific DNN service of the UE 1 cannot be processed locally.

If the AMF further determines the function network element configured to process the service locally, optionally, the first indication information may further indicate the function network element configured to process the locally processed service, and/or an area to which the first indication information is applicable. For example, the first indication information may include information indicating the function network element configured to process the locally processed service, and the information may indicate the function network element configured to process the locally processed service; and/or the first indication information may include information about the area to which the first indication information is applicable, and the area information may indicate the area to which the first indication information is applicable. To indicate the applicable area, for example, the first indication information may indicate coordinates of the area, a network in which the area is located, an identifier (for example, a cell (cell) identifier and/or a tracking area (tracking area, TA) identifier) of the area, or the like. For example, if the first indication information includes the mapping relationship between the identifier of the UE and the forwarding rule corresponding to the UE, or includes the forwarding rule corresponding to the UE, the information indicating the function network element configured to process the locally processed service and/or the information about the area to which the first indication information is applicable that is included in the first indication information may be included in the forwarding rule. The function network element configured to process the service corresponds to the corresponding service, and may not correspond to the UE. For example, for UEs corresponding to a same service, function network elements configured to process the service may be a same function network element.

For example, if the first indication information indicates that the service corresponding to the UE is processed locally, or indicates that all the services corresponding to the UE are processed locally, the first indication information may indicate a function network element configured to process each of the services corresponding to the UE. Alternatively, if the first indication information indicates the information about the service locally processed by the UE, the first indication information may indicate a function network element configured to process the service locally processed by the UE. In an indication manner in which the first indication information indicates the function network element, for example, the first indication information includes information about the function network element. The information about the function network element may include an identifier of the function network element, and the identifier of the function network element includes, for example, internet protocol (internet protocol, IP) address information or full qualified domain name (fully qualified domain name, FQDN) information of the function network element. If the first indication information indicates that the service corresponding to the UE is processed locally, or indicates that all the services corresponding to the UE are processed locally, the AMF may determine all the services corresponding to the UE. For example, the AMF may determine, based on the subscription information or the first policy information of the UE, all the services corresponding to the UE.

In an implementation, the first indication information is applicable to any area. In this case, the first indication information may not need to indicate the area to which the first indication information is applicable. Alternatively, in another implementation, if the area to which the first indication information is applicable is limited, the first indication information may indicate the area to which the first indication information is applicable. For example, the area to which the first indication information is applicable is an industrial park, a commercial building, or the like. If the first indication information indicates the applicable area, when the UE is in the area, the first indication information may be applied, that is, the service of the UE may be processed locally based on the first indication information. If the UE is not in the area, the first indication information cannot be applied, that is, whether the service of the UE is processed locally cannot be determined based on the first indication information, or the service of the UE cannot be processed locally.

For example, the first indication information includes a mapping relationship between forwarding rules corresponding to the UE, and the forwarding rule includes type information of the locally processed service, information indicating the function network element configured to process the locally processed service, and information about the area to which the first indication information is applicable. Table 2a, Table 2b, and Table 2c are three examples of the first indication information. In Table 2a, Table 2b, and Table 2c, for example, the first indication information does not include the identifier of the UE. Optionally, the first indication information may include one or more entries in Table 2a (one row in Table 2a is considered as one entry), and/or include Table 2b. Optionally, the first indication information may include one or more entries in Table 2a (one row in Table 2a is considered as one entry), and/or one or more entries in Table 2c (one row in Table 2c is considered as one entry).

**Table 2a**

| Service type | Function network element |
|---|---|
| Location service | LMF 1 |
| Sensing service | Sensing function 1 |

**Table 2b**

| Service type | Applicable area |
|---|---|
| Location service and sensing service | Area A |

It can be learned, based on the first indication information shown in Table 2a or Table 2b, that the location service and the sensing service of the UE 1 can be processed locally. If the UE 1 further corresponds to another service other than the location service and the sensing service, the another service cannot be processed locally. It can be learned, based on the first indication information shown in Table 2a, that a function network element configured to process the location service is the LMF 1, and a function network element configured to process the sensing service is the sensing function 1. The LMF 1 is an LMF that can process the location service, and the sensing function 1 is a sensing function network element that can process the sensing service. It can be learned, based on the first indication information shown in Table 2b, that an area to which the first indication information is applicable is the area A, or an area to which the service that can be processed locally is applicable is the area A. That is, only when the UE 1 is in the area A, the location service and the sensing service of the UE can be processed locally.

Optionally, the first indication information may include information indicating an area corresponding to the locally processed service, and areas corresponding to different services may be the same or may be different. For example, in the following Table 2c, the area B and the area C may be a same area, or may be different areas.

**Table 2c**

| Service type | Applicable area |
|---|---|
| Location service | Area B |
| Sensing service | Area C |

It can be learned, based on the first indication information shown in Table 2c, that when the UE 1 is in the area B, the location service of the UE 1 can be processed locally; and when the UE 1 is in the area C, the sensed service of the UE 1 can be processed locally.

Optionally, the method may further include S406: The AMF sends policy information to the UE. Correspondingly, the UE receives the policy information from the AMF. To be distinguished from the foregoing first policy information, the policy information herein is referred to as second policy information. The second policy information may also be referred to as a generation rule, a NAS generation rule, a local processing rule, or a control plane signaling generation rule, or may have another name.

The second policy information may indicate that the service corresponding to the UE is processed locally (or indicate that all the services corresponding to the UE are processed locally), or indicate the information about the service locally processed by the UE, or indicate that the control plane signaling of the service corresponding to the UE is forwarded by the first network element, or indicate that the control plane signaling of all the services corresponding to the UE is forwarded by the first network element, or indicate the information about the service corresponding to the UE and indicate that the control plane signaling of the service is forwarded by the first network element, or indicate that a distributed NAS manner is used for the service corresponding to the UE, or indicate that a distributed control plane signaling manner is used for the service corresponding to the UE, or indicate information about the service for which the UE uses the distributed NAS manner, or indicate information about the service for which the UE uses the distributed control plane signaling manner. In the following descriptions, for example, the second policy information indicates that the service corresponding to the UE is processed locally (or indicates that all the services corresponding to the UE are processed locally), or indicates the information about the service locally processed by the UE. If the second policy information indicates that the service corresponding to the UE is processed locally (or indicates that all the services corresponding to the UE are processed locally), in an indication manner, for example, the second policy information includes a fourth local service processing indication. The fourth local service processing indication may indicate that the UE is allowed to process a service locally, or indicate that the UE is allowed to process all the services locally. Alternatively, if the second policy information indicates the information about the service locally processed by the UE, in an indication manner, the second policy information may include the information about the service that the UE is allowed to process locally. For content included in the information about the service, refer to the foregoing descriptions.

For example, the second policy information may include a mapping relationship between the identifier of the UE and a processing rule corresponding to the UE. The processing rule may indicate that the service is processed locally (or indicate that all the services are processed locally), or indicate the information about the locally processed service. The identifier of the UE may indicate the UE. Therefore, the mapping relationship is equivalent to indicating that the service corresponding to the UE is processed locally (or indicating that all the services corresponding to the UE are processed locally), or indicating the information about the service locally processed by the UE. The identifier of the UE is, for example, an ID of the UE, for example, a 5G-globally unique temporary identifier (globally unique temporary identifier, GUTI) or a 6G-GUTI. Alternatively, because the second policy information is sent to the UE, the second policy information may not include the identifier of the UE, but include the processing rule corresponding to the UE.

For another example, the AMF sends a NAS message (or an MM NAS message) to the UE, and the NAS message includes the second policy information. The NAS message is, for example, a registration accept (registration accept) message.

Optionally, if the first indication information does not indicate that a first service can be processed locally, the AMF may send, to the UE, information about a function network element that is deployed in a public network or a central core network and that is configured to process the first service. The function network element is, for example, a third network element. For example, the AMF may determine, based on whether the first service can be processed locally, whether to send, to the UE, information about a function network element that is deployed in the public network (or the central core network) or the private network and that is configured to process the first service. Information about a deployment location of the function network element configured to process the first service may be preconfigured in the AMF. The deployment location is, for example, the private network (for example, a campus private network), or the public network or the central core network. For example, if the first service may be processed locally, the AMF may send, to the UE, information about the function network element that is deployed in the private network and that is configured to process the first service. Alternatively, if the first service cannot be processed locally, the AMF may send, to the UE, information about the function network element that is deployed in the public network or the central core network and that is configured to process the first service.

Optionally, the second policy information may further indicate the function network element configured to process the locally processed service, and/or an area to which the second policy information is applicable. For example, the second policy information may include information indicating the function network element configured to process the locally processed service, and the information may indicate the function network element configured to process the locally processed service; and/or the second policy information may include information about the area to which the second policy information is applicable, and the area information may indicate the area to which the second policy information is applicable. For more descriptions of this part of content, an example of the second policy information, and the like, refer to descriptions of the first indication information in S405.

Through the foregoing steps, both the first network element and the UE obtain a corresponding rule, and the UE may perform execution according to the obtained rule when initiating a service. To describe a process of initiating a service by the UE, or to describe a process of using the first indication information and the second policy information, this embodiment of this application may further include S407 and S408.

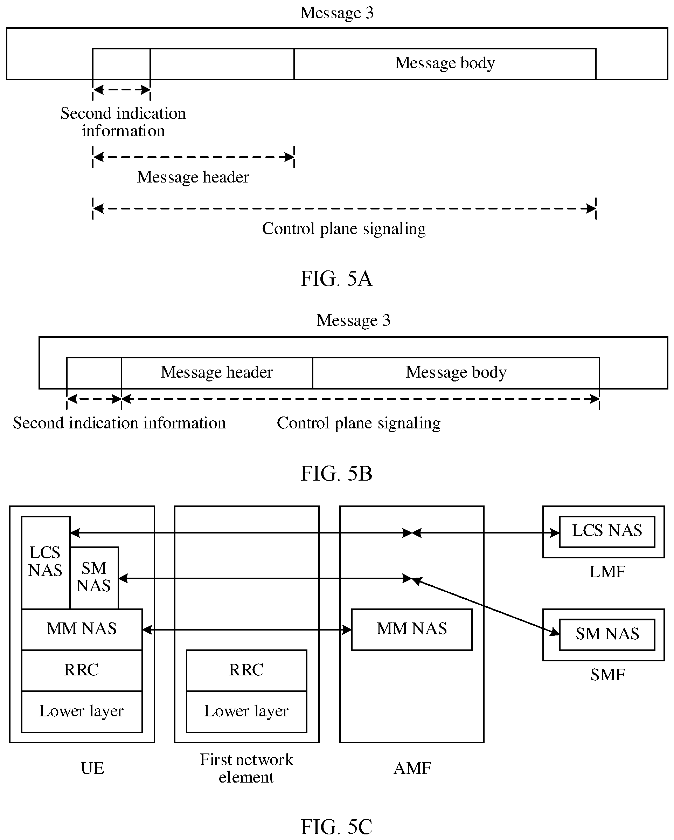

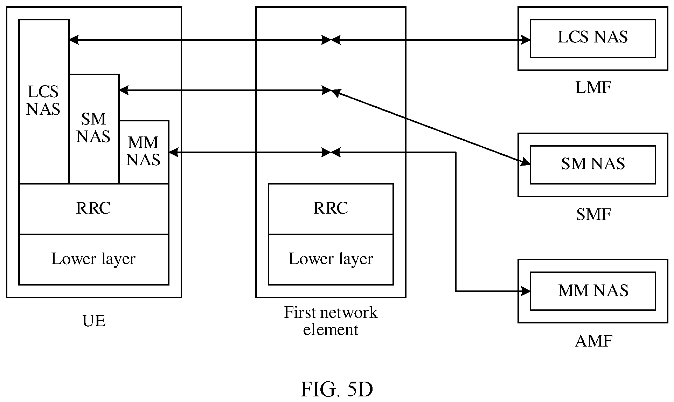

For example, if the UE can construct both a conventional NAS message (for example, in a transmission manner shown in FIG. 5C), for example, an MM NAS message, and new control plane signaling defined in embodiments of this application (which is described below, for example, in a transmission manner shown in FIG. 5D, where FIG. 5C and FIG. 5D are also described below), S406 may be performed. Alternatively, if the UE can construct the new control plane signaling defined in embodiments of this application, but cannot construct the conventional NAS message, for example, the MM NAS message, S406 may not be performed. In this case, regardless of whether a service can be processed locally, the UE can send only the new control plane signaling defined in embodiments of this application. Therefore, a corresponding policy does not need to be indicated to the UE.

S407: The UE sends a message to the first network element. Correspondingly, the first network element receives the message from the UE. The message is, for example, referred to as a message 3. The message may include control plane signaling. The control plane signaling requests, for example, the first service, or the control plane signaling is control plane signaling corresponding to the first service.

The control plane signaling is, for example, determined by the UE based on the second policy information. For example, if the UE needs to initiate the first service, the UE may determine, based on the second policy information, whether the first service can be processed locally. For example, if the second policy information indicates that the service corresponding to the UE is processed locally (or indicates that all the services corresponding to the UE are processed locally), the UE determines that the first service can be processed locally. Alternatively, if the second policy information includes more content, the UE may further determine, with reference to other information included in the second policy information, whether the first service can be processed locally. For example, the second policy information indicates that the service corresponding to the UE is processed locally (or indicates that all the services corresponding to the UE are processed locally), and the second policy information further includes the information about the area to which the second policy information is applicable. Then, if the UE is currently in the area indicated by the area information, the UE determines that the first service can be processed locally. If the UE is currently not in the area indicated by the area information, the UE determines that the first service cannot be processed locally.

For another example, the second policy information indicates the information about the service locally processed by the UE. For example, if the second policy information includes an identifier or type information of the service locally processed by the UE, the UE may determine whether an identifier or type information of the first service is included in the second policy information. If the identifier or the type information of the first service is included in the second policy information, the first service can be processed locally. Alternatively, if information (for example, information such as the identifier or the type information of the first service) about the first service is not included in the second policy information, the first service cannot be processed locally. Alternatively, if the second policy information includes more content, the UE may further determine, with reference to other information included in the second policy information, whether the first service can be processed locally. For example, the second policy information includes the information about the service locally processed by the UE, and the second policy information further includes the information about the area to which the second policy information is applicable. Then, if the UE is currently in the area indicated by the area information, and the information about the first service is included in the second policy information, the first service can be processed locally. If the UE is currently not in the area indicated by the area information, and/or the information about the first service is not included in the second policy information, the first service cannot be processed locally.

If the second policy information further includes more content, the UE may further determine, with reference to the more content, whether the first service can be processed locally. Details are not described.

If the first service cannot be processed locally, the message 3 is, for example, an access stratum (access stratum, AS) message, and the control plane signaling is a NAS message. For example, the control plane signaling is an MM NAS message, and the MM NAS message includes, for example, a service request corresponding to the first service. For example, the UE may place the service request in an N1 SM container (container), and place the N1 SM container in the MM NAS message.

Alternatively, if the first service can be processed locally, the message 3 is, for example, an AS message, and the control plane signaling is a NAS message. For example, the control plane signaling is an MM NAS message, and the MM NAS message includes, for example, the service request corresponding to the first service (for example, the first service is the location service, and the service request is, for example, an MO-LR request; for another example, the first service is the session service, and the service request is, for example, a protocol data unit (protocol data unit, PDU) session establishment request (PDU session establishment request)). Optionally, in this case, the message 3 may include indication information, and the indication information is, for example, referred to as second indication information. For example, the second indication information is included in the message 3 but is not included in the control plane signaling. The second indication information may indicate a service requested by the control plane signaling, for example, indicate the first service, or the second indication information may indicate a local service or indicate that the service requested by the control plane signaling is processed locally. In an indication manner in which the second indication information indicates the service requested by the control plane signaling, for example, the second indication information includes information about the service. For the information about the service, refer to the foregoing descriptions. In an indication manner in which the second indication information indicates the local service or indicates that the service requested by the control plane signaling is processed locally, for example, the second indication information may include one or more bits. When a value of the one or more bits is a first value, the local service is indicated, that is, it is equivalent to indicating that the service requested by the control plane signaling is a local service.

Alternatively, if the first service can be processed locally, the message 3 is, for example, an AS message, and the control plane signaling is a NAS message, or the control plane signaling may be another message other than the NAS message, or the control plane signaling is not referred to as the "NAS message" but has another name. This is not limited, but the control plane signaling is not an MM NAS message. For example, in this case, the control plane signaling may be signaling newly defined in embodiments of this application. The control plane signaling includes, for example, the service request corresponding to the first service. If the control plane signaling is an MM NAS message (and the message 3 does not include a corresponding indication, for example, does not include the second indication information), the first network element may not sense information such as a type of the control plane signaling, but directly forward the control plane signaling to the AMF. However, if the control plane signaling is the signaling newly defined in embodiments of this application, the first network element may determine the type of the control plane signaling.

Optionally, the message 3 may include the second indication information. In this implementation, the second indication information may indicate the type of the control plane signaling. For example, the second indication information may be included in the control plane signaling. With reference to FIG. 5A, the control plane signaling includes a message header and a message body, and the second indication information may be included in the message header. For example, the message header includes a type (type) field, and the type field may be used to carry the second indication information. For example, if the control plane signaling is the signaling newly defined in embodiments of this application, the second indication information may be included in the control plane signaling. Alternatively, with reference to FIG. 5B, the second indication information may be included in the message 3 but is not included in the control plane signaling. For example, the control plane signaling is the signaling newly defined in embodiments of this application, or the control plane signaling is an MM NAS message, and the second indication information may be included in the control plane signaling. The first network element may determine the type of the control plane signaling based on the second indication information in the message 3. The type of the control plane signaling may correspond to a service type, so that the first network element can determine, based on the type of the control plane signaling, the type of the service requested by the control plane signaling. Alternatively, the type of the control plane signaling may be the service type.

For example, if the first service is the sensing service, the type of the control plane signaling may be a sensing type. Alternatively, if the first service is the session service, the type of the control plane signaling may be a session type (in this case, for example, the control plane signaling is referred to as an SM NAS message (message), and optionally, the message 3 may further include network slice information, a DNN, or the like). Alternatively, if the first service is the location service, the type of the control plane signaling may be a location type (in this case, for example, the control plane signaling is referred to as a location NAS message (location NAS message), and optionally, the control plane signaling may include location requirement information or the like). It can be learned that in this embodiment of this application, different types of control plane signaling are defined, so that the first network element can identify the type of the control plane signaling, or the type of the service requested by the control plane signaling.

That is, when the UE can receive the second policy information, the UE may generate messages 3 in different formats/content based on whether the first service can be processed locally. The following describes, with reference to FIG. 5C and FIG. 5D, a difference between a message 3 in a conventional transmission manner (for example, FIG. 5C) and a message 3 (for example, FIG. 5D) in a scenario in which the first service can be processed locally.

FIG. 5C shows a transmission manner of an MM NAS message. FIG. 5D shows a transmission manner of control plane signaling newly defined in embodiments of this application. In FIG. 5C, two services are used as examples for description, and the two services are the location service and the session service respectively. In FIG. 5D, three services are used as examples for description, and the three services are the location service, the session service, and a mobility management service respectively. It can be learned from FIG. 5C that, for any service, the UE places a service request (for example, an LCS NAS corresponding to the location service or an SM NAS corresponding to the session service) corresponding to the service in an MM NAS message. After receiving the MM NAS message, the AMF sends the service request included in the MM NAS message to a corresponding function network element, for example, sends the LCS NAS to the LMF, or sends the SM NAS to the SMF.

It can be learned from FIG. 5D that, for different services, the UE generates NAS messages corresponding to the services. The NAS messages include service requests corresponding to the services. For example, for the location service, the UE may generate an LCS NAS message; for the session service, the UE may generate an SM NAS message; and for the mobility management service, the UE may generate an MM NAS message. The UE does not place NAS messages of the different services in MM NAS messages, but directly sends the generated NAS messages corresponding to the different services. After receiving the NAS messages from the UE, the first network element may send the received NAS messages to corresponding function network elements, for example, send the LCS NAS message to the LMF, or send the SM NAS message to the SMF, or send the MM NAS message to the AMF.

For example, the second policy information may indicate that the service corresponding to the UE is processed locally. The UE may construct a message based on the second policy information in the manner shown in FIG. 5C or FIG. 5D. For example, if the second policy information indicates that the location service is processed locally, the UE generates an LCS NAS message based on FIG. 5D. For another example, if the second policy information does not indicate that the location service is processed locally, the UE generates an MM NAS message based on FIG. 5C. The MM NAS message includes a location service request, for example, an MO-LR request.

For another example, the second policy information may indicate that the distributed NAS manner is used for the service corresponding to the UE, or indicate that the distributed control plane signaling manner is used for the service corresponding to the UE, or indicate the information about the service for which the UE uses the distributed NAS manner, or indicate the information about the service for which the UE uses the distributed control plane signaling manner. The UE constructs a message based on the second policy information in the manner of FIG. 5C or FIG. 5D. For example, if the second policy information indicates that the distributed NAS manner or the distributed control plane signaling manner is used for the location service, the UE generates an LCS NAS message based on FIG. 5D. For another example, if the second policy information does not indicate that the distributed NAS manner or the distributed control plane signaling manner is used for the location service, the UE generates an MM NAS message based on FIG. 5C. The MM NAS message includes a location service request, for example, an MO-LR request.

In the foregoing content of S407, for example, the UE can construct different control plane signaling. For example, the UE can construct both control plane signaling corresponding to a local service and control plane signaling corresponding to a non-local service, so that the first network element can identify different services, thereby providing different processing mechanisms for different services.

Alternatively, the UE can construct control plane signaling (for example, in the transmission manner shown in FIG. 5C) newly defined in embodiments of this application, but cannot construct a conventional NAS message (for example, in the transmission manner shown in FIG. 5D), for example, an MM NAS message. In this case, S406 may not be performed. That is, the UE does not obtain the second policy information, and the UE does not have a capability of constructing an MM NAS message. Then, when initiating a service (for example, the first service), the UE does not need to determine whether the first service can be performed locally. That is, regardless of whether the first service is a service that can be processed locally or a service that cannot be processed locally, the message 3 is, for example, an AS message, and the control plane signaling is not an MM NAS message. For example, the control plane signaling in this case may be signaling newly defined in embodiments of this application. The control plane signaling includes, for example, the service request corresponding to the first service. Optionally, the message 3 may include second indication information, and the second indication information may indicate a type of the control plane signaling. The second indication information may be included in the control plane signaling, for example, carried in a type field in the control plane signaling. Alternatively, the second indication information is included in the AS message but is not included in the control plane signaling. For more descriptions of the second indication information, refer to the foregoing descriptions.

Optionally, the message 3 may further include information about a second network element, and the second network element is a function network element that is disposed locally or deployed in a campus and that is configured to process the first service. For example, the second policy information indicates the function network element configured to process the locally processed service, and the locally processed service includes the first service. That is, the second policy information indicates the function network element configured to process the first service, for example, the second network element. In this case, the UE may add information about the second network element to the message 3, so that the first network element does not need to perform a process of selecting a local function network element, thereby simplifying implementation of the first network element. For example, the information about the second network element may be included in the message 3 but is not included in the control plane signaling.

Optionally, the message 3 may further include the location information of the UE.

S408: The first network element sends the control plane signaling or a reject message based on the first indication information. The control plane signaling is, for example, sent to the AMF or the second network element (the two cases are shown in S408 in FIG. 4), or sent to the third network element. Both the second network element and the third network element are function network elements configured to process the first service, but the second network element and the third network element are deployed at different locations. The second network element is located in the private network (or is not located in the public network or the central core network), while the third network element is located in the central core network or the public network, or is not located in the private network. The reject message is, for example, sent to the UE, to indicate that processing of the first service is rejected or the first service fails.

Optionally, if the first network element does not receive the first indication information, or the first indication information does not indicate that the service corresponding to the control plane signaling can be processed locally, the first network element may send a reject message to the UE. Optionally, the reject message may indicate a reject cause, for example, indicate that local processing is not allowed, or indicate an identification failure or the like. Alternatively, the first network element may not send a reject message, but send the control plane signaling to the AMF or the third network element. Because the first network element does not obtain the first indication information, the first network element does not determine whether to perform local processing. If the first network element sends the control plane signaling to the AMF, it is equivalent to that the first network element processes the control plane signaling according to an existing rule. Alternatively, because the first network element does not obtain the first indication information, the first network element may send the control plane signaling to the third network element. In this manner, although the first network element does not obtain the first indication information, the first network element may not send the control plane signaling to the AMF, but may directly send the control plane signaling to the third network element in the public network. This is equivalent to that the control plane signaling is not processed locally, but may not be forwarded by the AMF. Therefore, although the control plane signaling is not processed locally, this transmission manner can also shorten a transmission path of the control plane signaling, thereby helping to reduce a transmission delay of the control plane signaling.

Alternatively, optionally, if the control plane signaling is an MM NAS message, and the message 3 does not include corresponding indication information (for example, the second indication information), the first network element may send the control plane signaling to the AMF. It may be understood that, in this case, the first network element considers that the service requested by the control plane signaling is a service not processed locally, and therefore sends the control plane signaling to the AMF, and the AMF selects a corresponding function network element to perform the service.

Alternatively, optionally, the control plane signaling is an MM NAS message, and the message 3 includes the second indication information. For example, the second indication information is included in the message 3 but is not included in the control plane signaling. The first network element obtains the second indication information from the message 3. For example, if the second indication information indicates the first service, the first network element may determine, based on the first indication information, whether the first service is processed locally, or determine, based on the first indication information, how to forward the control plane signaling. For example, if the first indication information indicates that the service corresponding to the UE is processed locally (or indicates that all the services corresponding to the UE are processed locally), the first network element determines that the first service can be processed locally, or sends the control plane signaling to the second network element. Alternatively, if the first indication information includes more content, the first network element may further determine, with reference to other information included in the first indication information, whether the first service can be processed locally, or determine how to forward the control plane signaling. For example, if the first indication information indicates that the service corresponding to the UE is processed locally (or indicates that all the services corresponding to the UE are processed locally), and the first indication information further includes the information about the area to which the first indication information is applicable, the first network element may determine a location of the UE (for example, the first network element may initiate positioning on the UE, or the first network element has obtained the location information of the UE in advance). If the UE is currently in the area indicated by the area information, the first network element determines that the first service can be processed locally, or sends the control plane signaling to the second network element. If the UE is currently not in the area indicated by the area information, the first network element determines that the first service cannot be processed locally, or the first network element sends the control plane signaling to the AMF or the third network element to perform the first service by using the public network or the central core network, or the first network element sends a reject message to the UE. Optionally, the reject message may indicate a reject cause, for example, indicate that local processing is not allowed.

Alternatively, optionally, the control plane signaling is not an MM NAS message but a message newly defined in embodiments of this application, for example, an SM NAS message, and the message 3 includes the second indication information. The first network element obtains the second indication information from the message 3. The second indication information indicates, for example, the type of the control plane signaling, for example, the session type. The first network element may determine, based on the type of the control plane signaling, that the service corresponding to the control plane signaling is the first service, for example, the session service. In this case, the first network element may further determine, based on the first indication information, whether the service corresponding to the control plane signaling is processed locally. For related content of determining, by the first network element based on the first indication information, whether the service is processed locally, refer to descriptions in the previous paragraph. In this implementation, if the second indication information is included in the control plane signaling (refer to FIG. 5A), the first network element may parse the control plane signaling to obtain the second indication information. In the existing manner, after receiving the AS message, the first network element directly forwards the MM NAS message included in the AS message, without parsing the MM NAS message. However, in this embodiment of this application, if the second indication information is included in the control plane signaling, the first network element may parse the NAS message included in the AS message. For example, the first network element may parse the message header of the NAS message, to determine a type of the NAS message. Alternatively, if the second indication information is included in the message 3 but is not included in the control plane signaling (refer to FIG. 5B), the first network element may obtain the second indication information from the message 3 without parsing the control plane signaling.

In addition, optionally, in addition to the control plane signaling, the message 3 may further include other information, for example, first network slice information, indicating that the first service is a service of a network slice corresponding to the first network slice information, or a service corresponding to a first DNN. Then, the first network element can determine, based on the control plane signaling, the service corresponding to the control plane signaling. Further, the first network element may determine, based on the first indication information and the first network slice information or the first DNN, whether the first service is processed locally. For example, the message 3 includes the first network slice information. If the first indication information indicates that the service of the network slice corresponding to the first network slice information of the UE is processed locally, the first network element may determine that the first service is processed locally. Alternatively, if the first indication information indicates that the service of the network slice corresponding to the first network slice information of the UE is not processed locally, or the service that can be processed locally and that is indicated by the first indication information does not include the service of the network slice corresponding to the first network slice information, the first network element may determine that the first service is not processed locally. If the message 3 includes the first DNN, a processing manner of the first network element is similar thereto.

For another example, the first indication information indicates the information about the service locally processed by the UE. For example, if the first indication information includes the information about the service locally processed by the UE, the first network element may determine whether the information about the first service is included in the first indication information. If the information about the first service is included in the first indication information, the first network element determines that the first service can be processed locally, or the first network element sends the control plane signaling to the second network element. Alternatively, if the information about the first service is not included in the first indication information, the first network element determines that the first service cannot be processed locally, or the first network element sends the control plane signaling to the AMF or the third network element, or sends a reject message to the UE. Alternatively, if the first indication information includes more content, the first network element may further determine, with reference to other information included in the first indication information, whether the first service can be processed locally, or determine how to forward the control plane signaling. For example, if the first indication information includes the information about the service locally processed by the UE, and the first indication information further includes the information about the area to which the first indication information is applicable, the first network element may determine a location of the UE (for example, the first network element may initiate positioning on the UE, or the first network element has obtained the location information of the UE in advance, or the UE may place the location information of the UE in the message sent to the first network element). If the UE is currently in the area indicated by the area information, and the information about the first service is included in the first indication information, the first network element determines that the first service can be processed locally, or sends the control plane signaling to the second network element. If the UE is currently not in the area indicated by the area information, and/or the information about the first service is not included in the first indication information, the first network element determines that the first service cannot be processed locally, or the first network element sends the control plane signaling to the AMF or the third network element, or sends a reject message to the UE. Optionally, the reject message may indicate a reject cause, for example, indicate that local processing is not allowed.

If the first indication information further includes more content, the first network element may further determine, with reference to the more content, whether the first service can be processed locally, or determine how to forward the control plane signaling. Details are not described.

For example, the first indication information is Table 2b. For example, the second indication information in the message 3 indicates the type of the first service, for example, the location service. The first network element determines that type information of the first service is included in the first indication information, indicating that the first service can be processed locally. In addition, if the first network element determines that a current location of the UE is in the area A, the first network element may determine that the first service can be processed locally. This is equivalent to that both the type of the first service and the current location of the UE indicate that the first service can be processed locally.

Alternatively, optionally, if the control plane signaling is not an MM NAS message but a message newly defined in embodiments of this application, and the message 3 includes the second indication information, for example, the second indication information indicates that the type of the control plane signaling is the location type, the first network element may determine, based on the type, that the service corresponding to the control plane signaling is the first service. The first service is, for example, the location service. Then, the first network element may determine, based on the first indication information, whether the first service is processed locally, or determine how to forward the control plane signaling. For descriptions of this, refer to the foregoing descriptions. In this implementation, if the second indication information is included in the control plane signaling (refer to FIG. 5A), the first network element may parse the control plane signaling to obtain the second indication information. In the existing manner, after receiving the AS message, the first network element directly forwards the MM NAS message included in the AS message, without parsing the MM NAS message. However, in this embodiment of this application, if the second indication information is included in the control plane signaling, the first network element may parse the NAS message included in the AS message. For example, the first network element may parse the message header of the NAS message, to determine a type of the NAS message. Alternatively, if the second indication information is included in the message 3 but is not included in the control plane signaling (refer to FIG. 5B), the first network element may obtain the second indication information from the message 3 without parsing the control plane signaling.

If the first network element determines whether the first service can be processed locally, S408 may include step a and step b. Step a: The first network element determines, based on the first indication information, whether the first service is processed locally. Step b: The first network element sends the control plane signaling (the control plane signaling is sent to the second network element, the AMF, or the third network element) or the reject message (for example, sent to the UE) based on a determining result. Alternatively, if the first network element determines how to forward the first service, it may be considered that S408 includes only one step: The first network element sends the control plane signaling or the reject message based on the first indication information.

Optionally, the message 3 may further include the information about the second network element. In this case, the first network element does not need to perform a process of selecting a local function network element. For example, if the first service is the location service, and the message 3 includes an ID of the LMF, the first network element may send the control plane signaling to the LMF. For another example, if the first service is the session service, and the message 3 includes an ID of the SMF, the first network element may send the control plane signaling to the SMF.

Alternatively, the message 3 does not include the information about the second network element, but the first network element needs to send the control plane signaling to a local function network element. In this case, the first network element may select a function network element for processing the first service. For example, the information about the second network element is locally preconfigured in the first network element; or the first indication information indicates the function network element configured to process the locally processed service, and the first indication information also indicates that the first service is a locally processed service. In this case, the first network element may determine, based on the preconfigured information or the first indication information, a function network element configured to process the first service, for example, the second network element.

Optionally, the message 3 may further include the information about the third network element. In this case, even if the first service is not processed locally, the first network element does not need to perform a process of selecting a function network element. Alternatively, the message 3 does not include the information about the third network element. In this case, the first network element may select a function network element configured to process the first service. The function network element is located in the public network or the central core network.

Through the foregoing steps, the first service is performed.

Optionally, the foregoing S405 may not be performed. That is, the AMF may not need to send the first indication information to the first network element. In this case, the first network element may not perform S408, but may forward the control plane signaling from the UE according to the local processing mechanism by default. For example, after the first network element receives the message from the UE, if the message includes the second indication information, the first network element does not need to determine whether the service requested by the control plane signaling included in the message can be processed locally, but sends the control plane signaling to a local function network element by default. In this implementation, the local function network element may obtain a corresponding rule. The second network element is used as an example. The second network element may obtain indication information, for example, referred to as third indication information. The third indication information may indicate whether local processing is allowed, whether receiving, from the first network element, of control plane signaling corresponding to a service is allowed, or the like. Optionally, the second network element may request to obtain the third indication information from a network element such as the PCF or the UDM, or may obtain the third indication information in another manner. Different function network elements may correspond to different services. Therefore, third indication information obtained by the different function network elements may be different. For example, if the second network element is the LMF, third indication information obtained by the LMF may indicate whether the location service is allowed to be processed locally (for example, the third indication information indicates local positioning allowed (local positioning allowed) or local positioning not allowed (local positioning not allowed)), whether receiving, from the first network element, of control plane signaling corresponding to the location service is allowed, or the like. For another example, if the second network element is the SMF, third indication information obtained by the SMF may indicate whether the session service is allowed to be processed locally (for example, the third indication information indicates local session allowed (local session allowed) or local session not allowed (local session not allowed)), whether a specific network slice or DNN allows the session service to be processed locally, whether receiving, from the first network element, of control plane signaling corresponding to the session service is allowed, or the like.

In this embodiment of this application, the AMF may determine, based on the first information, whether the service corresponding to the UE is processed locally. Therefore, a method for determining whether the service of the UE can be processed locally is provided, so that the service of the UE can be processed locally. In addition, if the service of the UE is processed locally, the AMF may further send corresponding indication information to the first network element and the UE, so that the first network element and the UE can process the service of the UE according to the local processing mechanism, thereby implementing the local processing mechanism. Because the service of the UE can be processed locally, in a processing process, control plane signaling of the UE may not pass through the AMF, but may be sent by the first network element to a local function network element. Therefore, a roundabout transmission process of the signaling is reduced, and a transmission delay is reduced.

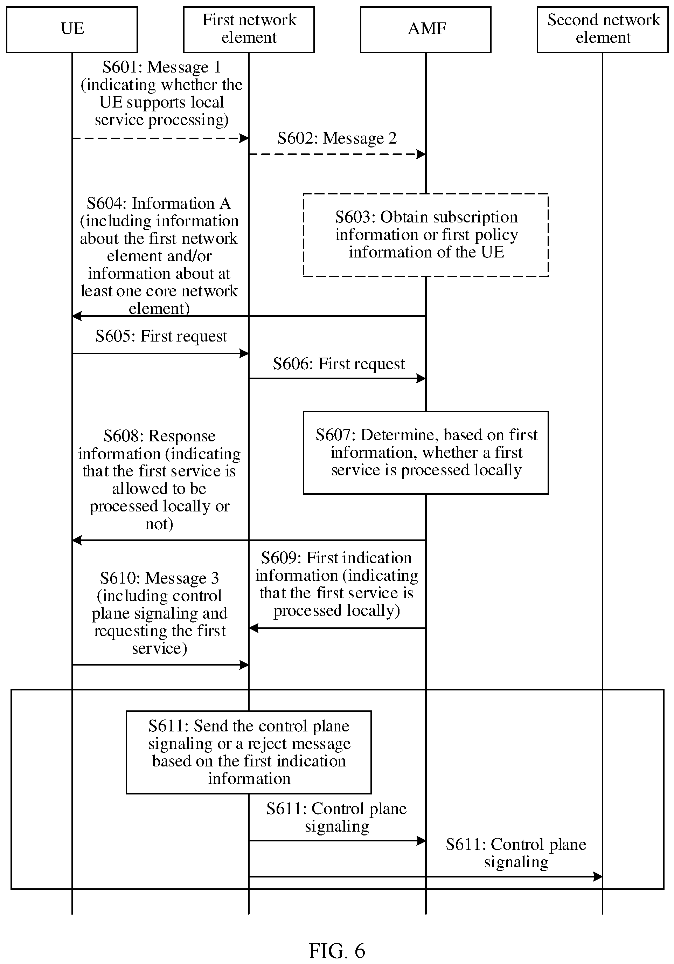

An embodiment of this application provides a second communication method. FIG. 6 is a flowchart of the method. Different from the embodiment shown in FIG. 4, in the embodiment shown in FIG. 6, the AMF does not need to first determine a corresponding rule, but determines, when the UE initiates a service, whether the service can be processed locally.

S601: A UE sends a message 1 to a first network element. Correspondingly, the first network element receives the message 1 from the UE.

For more content of S601, refer to S401 in the embodiment shown in FIG. 4.

S602: The first network element sends a message 2 to an AMF. Correspondingly, the AMF receives the message 2 from the first network element.

For more content of S602, refer to S402 in the embodiment shown in FIG. 4.

S603: The AMF obtains subscription information or policy information of the UE.

For more content of S603, refer to S403 in the embodiment shown in FIG. 4. S601 to S603 are optional steps.

S604: The AMF sends information A to the UE. Correspondingly, the UE receives the information A from the AMF.

The information A includes, for example, information about the first network element, and/or information about at least one core network element. The UE may determine, based on the information about the first network element and/or the information about the at least one core network element, whether a service corresponding to the UE is processed locally. That is, in this embodiment of this application, the AMF may not need to first determine whether the service of the UE can be processed locally. Instead, when subsequently initiating the service, the UE first autonomously determines whether the service can be processed locally. For descriptions of content such as the information about the first network element and the information about the at least one core network element, refer to S404 in the embodiment shown in FIG. 4.

S605: The UE sends a first request (service request) to the first network element. Correspondingly, the first network element receives the first request from the UE. The first request may request to process a first service locally. Optionally, the first request is, for example, a service request (service request), or may be information of another type. In this specification, for example, the first request is a service request.

For example, if the UE needs to initiate the first service, the UE may first determine whether the first service can be processed locally. For example, the UE determines, based on the information about the first network element and/or the information about the at least one core network element, whether the first service can be processed locally, or determines, based on one or more of information about the UE, the information about the first network element, or the information about the at least one core network element, whether the first service can be processed locally. For descriptions of the information about the UE, refer to S404 in the embodiment shown in FIG. 4. For a determining process of the UE, also refer to S404 in the embodiment shown in FIG. 4. A difference lies in that in this embodiment of this application, the UE only needs to determine whether the first service is processed locally, and does not need to determine whether another service is processed locally.

For example, the subscription information of the UE indicates that the UE is allowed to process a service locally, the capability information of the UE indicates information about a service (including the first service) for which the UE supports local processing, the information about the first network element indicates that the first network element supports message forwarding to a local function network element, and the information about the at least one core network element indicates that a function network element corresponding to the first service supports a local processing mechanism. Then, the AMF may determine, with reference to the foregoing information, that the first service of the UE can be processed locally.

If the first service can be processed locally, the UE may perform S605. Alternatively, if the first service cannot be processed locally, the UE does not need to perform S605, but may send an AS message to the first network element. The AS message includes control plane signaling, the control plane signaling is a NAS message, for example, an MM NAS message, and the MM NAS message includes the service request corresponding to the first service. The first network element sends the MM NAS message to the AMF. After receiving the MM NAS message, the AMF sends the service request to a function network element configured to process the first service.

Optionally, the service request may indicate a type of the first service, and/or indicate that the first service is a local service. For example, the service request includes service type (service type) information, and the service type information may indicate the type of the first service, for example, a location service, a sensing service, a session service, a network slice, or a DNN. In an indication manner in which the service request indicates that the first service is a local service, for example, the service request includes fourth indication information. The fourth indication information may indicate a local service, or indicate that the first service is a local service. The fourth indication information may also be referred to as, for example, a local processing indication. A name is not limited.

Optionally, in S605, the UE may send an AS message to the first network element, and the AS message may include the service request.

S606: The first network element sends the service request to the AMF. Correspondingly, the AMF receives the service request from the first network element.

The first network element has not obtained a corresponding local processing rule from the AMF. Therefore, after receiving the service request, the first network element may directly forward the service request to the AMF.

S607: The AMF determines, based on first information, whether the first service is processed locally.

For more content of S607, refer to S404 in the embodiment shown in FIG. 4. A difference lies in that in this embodiment of this application, the AMF only needs to determine whether the first service is processed locally, and may not need to determine whether another service of the UE is processed locally.

Optionally, the AMF may autonomously perform S607, that is, the AMF autonomously determines, based on the first information, whether the first service is processed locally, so that an interaction process between network elements can be reduced. Alternatively, the AMF may perform S607 by using another network element, for example, a PCF. For descriptions of this, refer to S404 in the embodiment shown in FIG. 4.

Alternatively, because the UE has determined that the first service can be processed locally, the AMF may not need to perform determining again. In this case, S607 may not need to be performed.

S608: The AMF sends response information to the UE. Correspondingly, the UE receives the response information from the AMF.

If S607 is performed, the response information may indicate that the first service is allowed to be processed locally, or indicate that control plane signaling of the first service corresponding to the UE is forwarded by the first network element to a local function network element, or indicate information about the first service corresponding to the UE and indicate that the control plane signaling of the first service is forwarded by the first network element to the local function network element. Alternatively, the response information may indicate that the first service is not allowed to be processed locally, or indicate that the control plane signaling of the first service corresponding to the UE is not forwarded by the first network element to the local function network element, or indicate the information about the first service corresponding to the UE and indicate that the control plane signaling of the first service is not forwarded by the first network element to the local function network element, or indicate that the control plane signaling of the first service corresponding to the UE is forwarded by the first network element to the AMF, or indicate the information about the first service corresponding to the UE and indicate that the control plane signaling of the first service is forwarded by the first network element to the AMF. An example in which the response information indicates that the first service is allowed to be processed locally or indicates that the first service is not allowed to be processed locally is used below. If S607 is not performed, the response information may indicate the UE to process the first service. For example, the response information may be a response to the service request in S605. Alternatively, if S607 is not performed, the AMF may not send the response information to the UE, that is, S608 may not be performed.

If the response information indicates that the first service is allowed to be processed locally, the response information may also be referred to as a distributed processing allowed indication, an indication of allowing generation of distributed control plane signaling, an indication of constructing a distributed NAS message, a distributed NAS allowed indication, a local service processing allowed indication, or the like. If the response information indicates that the first service is not allowed to be processed locally, the response information may also be referred to as a distributed processing rejected indication, an indication of rejecting generation of distributed control plane signaling, an indication of rejecting construction of a distributed NAS message, a distributed NAS rejected indication, a local service processing rejected indication, or the like. A name is not limited.

Optionally, if the first service is allowed to be processed locally, the response information may further indicate a locally disposed function network element configured to process the first service, for example, a second network element. For example, the response information includes information about the second network element. The information about the second network element may include an identifier of the second network element, and the identifier of the second network element includes, for example, IP address information or FQDN information of the second network element.

S609: The AMF sends first indication information to the first network element. Correspondingly, the first network element receives the first indication information from the AMF.

In this embodiment of this application, the first indication information may indicate that the first service is processed locally, or indicate that the control plane signaling of the first service corresponding to the UE is forwarded by the first network element to the local function network element, or indicate the information about the first service corresponding to the UE and indicate that the control plane signaling of the first service is forwarded by the first network element to the local function network element. In the following descriptions, for example, the first indication information indicates that the first service is processed locally. Optionally, if S607 is performed, and the first service is allowed to be processed locally, S609 may be performed. Alternatively, if the first service is not allowed to be processed locally, S609 does not need to be performed. Alternatively, if S607 is not performed, after receiving the service request from the first network element in S606, the AMF may send the first indication information to the first network element.

For example, the first indication information may include a mapping relationship between an identifier of the UE and a forwarding rule corresponding to the UE. The forwarding rule may indicate that the first service is processed locally, and the identifier of the UE may indicate the UE. Therefore, the mapping relationship is equivalent to indicating that the first service corresponding to the UE is processed locally. The identifier of the UE is, for example, an ID of the UE. The identifier of the UE may be a temporary identifier allocated by the AMF or the first network element to the UE, for example, an AMF UE NGAP ID or a RAN UE NGAP ID. For example, the first indication information includes a mapping relationship between the identifier of the UE and type information of the first service, so that the first network element can determine that a service of this type can be processed locally.

Optionally, the first indication information may further indicate the function network element configured to process the first service, and/or an area to which the first indication information is applicable. For descriptions of this, refer to S405 in the embodiment shown in FIG. 4.

For example, the first indication information includes the mapping relationship between the identifier of the UE and the forwarding rule corresponding to the UE, and the forwarding rule includes the type information of the first service, information indicating the function network element configured to process the first service, and information about the area to which the first indication information is applicable. Table 3a is an example of the first indication information. Table 3a shows an example in which the first service is the location service.

**Table 3a**

| UE identifier | Applicable area | Service type | Function network element |
|---|---|---|---|
| 1 | Area A | Location service | LMF 1 |

It can be learned, based on the first indication information, that the location service of the UE 1 can be processed locally. If the UE 1 further corresponds to another service other than the location service and the sensing service, the first network element cannot determine whether the another service is processed locally. In addition, an area to which the first indication information is applicable is the area A, and a function network element configured to process the location service is the LMF 1. The LMF 1 is an LMF that can process the location service.

Optionally, the AMF sends the first indication information to the first network element by using an N2 message. The N2 message may include the identifier of the UE and the first indication information, and the identifier of the UE may be the temporary identifier allocated by the AMF or the first network element to the UE, for example, the AMF UE NGAP ID or the RAN UE NGAP ID. The N2 message is, for example, an initial context setup request message. For example, Table 3b shows another example of the first indication information. In this example, the identifier of the UE is included in the N2 message but is not included in the first indication information. Therefore, different from that in Table 3a, the first indication information shown in Table 3b does not include the identifier of the UE.

**Table 3b**

| Applicable area | Service type | Function network element |
|---|---|---|
| Area A | Location service | LMF 1 |

S610: The UE sends a message to the first network element. Correspondingly, the first network element receives the message from the UE. The message is, for example, referred to as a message 3. The message may include control plane signaling. The control plane signaling requests, for example, the first service, or the control plane signaling is control plane signaling corresponding to the first service.

For example, if the response information in S608 indicates that the first service is not allowed to be processed locally, the message 3 is, for example, an AS message, and the control plane signaling is a NAS message. For example, the control plane signaling is an MM NAS message, and the MM NAS message includes, for example, the service request corresponding to the first service. For example, the UE may place the service request in an N1 SM container, and place the N1 SM container in the MM NAS message.

Alternatively, if the response information in S608 indicates that the first service is allowed to be processed locally, or the response information in S608 indicates the UE to process the first service (for example, S607 is not performed), or S608 is not performed (for example, S607 is not performed, and optionally, if S608 is not performed, the UE may start a timer when sending of the first request in S605 is completed, and may send the message 3 to the first network element when the timer expires), the message 3 is, for example, an AS message, and the control plane signaling is a NAS message. For example, the control plane signaling is an MM NAS message, and the MM NAS message includes, for example, the service request corresponding to the first service. Optionally, in this case, the message 3 may include second indication information. The second indication information may indicate a service requested by the control plane signaling, for example, indicate the first service, or the second indication information may indicate a local service, or the second indication information may indicate that the service requested by the control plane signaling is processed locally. For more descriptions of this, refer to S407 in the embodiment shown in FIG. 4.

Alternatively, if the response information in S608 indicates that the first service is allowed to be processed locally, or the response information in S608 indicates the UE to process the first service, or S608 is not performed, the message 3 is, for example, an AS message, and the control plane signaling is a NAS message, or the control plane signaling may be another message other than the NAS message, or the control plane signaling is not referred to as the "NAS message" but has another name. This is not limited herein, but the control plane signaling is not an MM NAS message. For example, the control plane signaling in this case may be signaling newly defined in embodiments of this application. The control plane signaling includes, for example, the service request corresponding to the first service. Optionally, the message 3 may include the second indication information. In this implementation, the second indication information may indicate the type of the control plane signaling. For more descriptions of the second indication information, refer to S407 in the embodiment shown in FIG. 4. For example, for a manner of carrying the second indication information in the message 3, refer to FIG. 5A or FIG. 5B.

Optionally, the message 3 may further include the information about the second network element. For example, the response information in S608 indicates that the function network element configured to process the processed locally first service is the second network element. In this case, the UE may add the information about the second network element to the message 3, so that the first network element does not need to perform a process of selecting a local function network element, thereby simplifying implementation of the first network element.

S611: The first network element sends the control plane signaling or a reject message based on the first indication information. The control plane signaling is, for example, sent to the AMF or the second network element. The reject message is, for example, sent to the UE, to indicate that processing of the first service is rejected or the first service fails.

For more content of S611, refer to S408 in the embodiment shown in FIG. 4.

Optionally, the foregoing S609 may not be performed. That is, the AMF may not need to send the first indication information to the first network element. In this case, the first network element may not perform S611, but may forward the control plane signaling from the UE according to the local processing mechanism by default. For example, after the first network element receives the message from the UE, if the message includes the second indication information, the first network element does not need to determine whether the service requested by the control plane signaling included in the message can be processed locally, but sends the control plane signaling to a local function network element by default. In this implementation, the local function network element may obtain a corresponding rule. For descriptions of this, refer to the last content in S408 in the embodiment shown in FIG. 4.

In this embodiment of this application, all network elements such as the UE and the AMF may determine whether the service corresponding to the UE is processed locally. Therefore, a method for determining whether the service of the UE can be processed locally is provided, so that the service of the UE can be processed locally. In this embodiment of this application, when initiating the service, the UE first determines whether the service is processed locally. Therefore, subsequently, a network element such as the AMF only needs to determine whether the service is processed locally, and does not need to perform determining for excessive services at a time, so that a determining process can be simplified. In addition, if the service of the UE is processed locally, the AMF may further send corresponding indication information to the first network element, so that the first network element and the UE can process the service of the UE according to the local processing mechanism, thereby implementing the local processing mechanism. Because the service of the UE can be processed locally, in a processing process, control plane signaling of the UE may not pass through the AMF, but may be sent by the first network element to a local function network element. Therefore, a roundabout transmission process of the signaling is reduced, and a transmission delay is reduced.

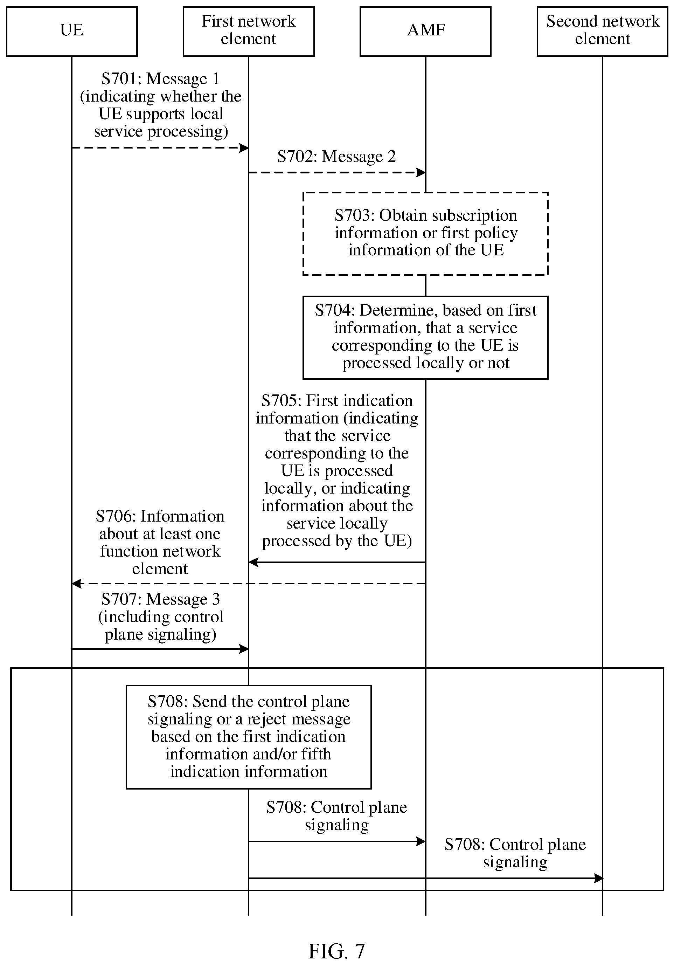

An embodiment of this application provides a third communication method. FIG. 7 is a flowchart of the method. Different from the foregoing several embodiments, in the embodiment shown in FIG. 7, the UE does not send an MM NAS message, but sends only new control plane signaling defined in embodiments of this application. For example, the UE may not have a capability of sending an MM NAS message. That is, the embodiment shown in FIG. 7 has a lower capability requirement on the UE, and is applicable to more UEs.

S701: A UE sends a message 1 to a first network element. Correspondingly, the first network element receives the message 1 from the UE.

For more content of S701, refer to S401 in the embodiment shown in FIG. 4.

S702: The first network element sends a message 2 to an AMF. Correspondingly, the AMF receives the message 2 from the first network element.

For more content of S702, refer to S402 in the embodiment shown in FIG. 4.

S703: The AMF obtains subscription information or policy information of the UE.

For more content of S703, refer to S403 in the embodiment shown in FIG. 4. S601 to S603 are optional steps.

S704: The AMF determines, based on first information, whether a service corresponding to the UE is processed locally or not. Alternatively, in S704, the AMF determines, based on the first information, which services corresponding to the UE are processed locally and/or which services are not processed locally.

For a determining process of the AMF, refer to S404 in the embodiment shown in FIG. 4.

In S704, the AMF may determine, based on the first information, that a part of or all services corresponding to the UE are processed locally, or may determine that all the services of the UE cannot be processed locally. If a part of services corresponding to the UE are processed locally, the AMF may also determine that a remaining service corresponding to the UE is not processed locally.

S705: The AMF sends first indication information to the first network element. Correspondingly, the first network element receives the first indication information from the AMF.

The first indication information may indicate that the service corresponding to the UE is processed locally (or indicate that all the services corresponding to the UE are processed locally), or indicate information about the service locally processed by the UE, or indicate that control plane signaling of the service corresponding to the UE is forwarded by the first network element to a local function network element, or indicate that control plane signaling of all the services corresponding to the UE is forwarded by the first network element to a local function network element, or indicate the information about the service corresponding to the UE and indicate that the control plane signaling of the service is forwarded by the first network element to the local function network element. In the following descriptions, for example, the first indication information indicates that the service corresponding to the UE is processed locally (or indicates that all the services corresponding to the UE are processed locally), or indicates the information about the service locally processed by the UE. For example, if all the services corresponding to the UE are processed locally, the AMF may send first indication information, and the first indication information may indicate that the service corresponding to the UE is processed locally (or indicate that all the services corresponding to the UE are processed locally). Alternatively, if a part of services corresponding to the UE are processed locally, the AMF may send first indication information, and the first indication information in this case may indicate information about the locally processed services corresponding to the UE. For example, the first indication information includes information about these services.

For example, the first indication information may include a mapping relationship between an identifier of the UE and a forwarding rule corresponding to the UE. The forwarding rule may indicate that the service is processed locally (or indicate that all the services are processed locally), or indicate the information about the locally processed service. The identifier of the UE may indicate the UE. Therefore, the mapping relationship is equivalent to indicating that the service corresponding to the UE is processed locally (or indicating that all the services corresponding to the UE are processed locally), or indicating the information about the service locally processed by the UE. The identifier of the UE is, for example, an ID of the UE. The identifier of the UE may be a temporary identifier allocated by the AMF or the first network element to the UE, for example, an AMF UE NGAP ID or a RAN UE NGAP ID.

Optionally, the first indication information may include one mapping relationship, and the mapping relationship is a mapping relationship between an identifier of one UE and a forwarding rule corresponding to the UE. Alternatively, the first indication information may include a plurality of mapping relationships, and each mapping relationship is a mapping relationship between one UE and a forwarding rule corresponding to the UE, which is equivalent to that forwarding rules of a plurality of UEs may be indicated by using one piece of first indication information. This is not limited herein. In this embodiment of this application, an example in which the mapping relationship includes one mapping relationship is used for description.

Optionally, the AMF sends the first indication information to the first network element by using an N2 message. The N2 message may include the identifier of the UE and the first indication information. That is, the identifier of the UE may be included in the N2 message but is not included in the first indication information. The identifier of the UE may be the temporary identifier allocated by the AMF or the first network element to the UE, for example, the AMF UE NGAP ID or the RAN UE NGAP ID.

Optionally, the first indication information may further indicate a function network element configured to process the locally processed service, and/or an area to which the first indication information is applicable. For more descriptions of this, refer to S405 in the embodiment shown in FIG. 4. For more descriptions of the first indication information, also refer to S405 in the embodiment shown in FIG. 4.

If the first indication information indicates the information about the locally processed service corresponding to the UE, optionally, the AMF may further send fifth indication information to the first network element. The fifth indication information may indicate information about a service that corresponds to the UE and that is not processed locally. For example, the fifth indication information includes the information about the service. Alternatively, the AMF may not need to send the fifth indication information, and the first network element can determine, based on the first indication information, that a service not indicated by the first indication information is a service not processed locally.

Alternatively, if all the services corresponding to the UE are not processed locally, the AMF may not need to perform S705. For example, the AMF may send fifth indication information to the first network element, and the fifth indication information in this case may indicate that the service corresponding to the UE is not processed locally, or indicate that all the services corresponding to the UE are not processed locally.

An implementation of the fifth indication information may be similar to the implementation of the first indication information.

Optionally, the method may further include S706: The AMF sends information about at least one core network element to the UE. Correspondingly, the UE receives the information about the at least one core network element. The at least one core network element is a locally disposed function network element configured to process the service that corresponds to the UE and that is allowed to be processed locally, for example, includes a local network element such as an LMF, an SMF, or a sensing function. For example, if the first indication information indicates that the service corresponding to the UE is processed locally (or indicates that all the services corresponding to the UE are processed locally), the at least one core network element may include a function network element configured to process all or a part of services corresponding to the UE. For another example, if the first indication information indicates the information about the service that corresponds to the UE and that is allowed to be processed locally, the at least one core network element may include a function network element configured to process all or a part of services that correspond to the UE and that are allowed to be processed locally. For more descriptions of the information about the at least one core network element, refer to S404 in the embodiment shown in FIG. 4.

S707: The UE sends a message to the first network element. Correspondingly, the first network element receives the message from the UE. The message is, for example, referred to as a message 3. The message may include control plane signaling. The control plane signaling requests, for example, a first service, or the control plane signaling is control plane signaling corresponding to the first service.

In this embodiment of this application, the UE neither obtains a corresponding local processing rule, nor can construct an MM NAS message. Therefore, the UE does not perform determining on a service to be initiated. That is, regardless of whether the first service is a service that can be processed locally or a service that cannot be processed locally, the message 3 is, for example, an AS message, and the control plane signaling is a NAS message, or the control plane signaling may be another message other than the NAS message, or the control plane signaling is not referred to as the "NAS message" but has another name. This is not limited herein, but the control plane signaling is not an MM NAS message. For example, the control plane signaling in this case may be signaling newly defined in embodiments of this application. The control plane signaling includes, for example, a service request corresponding to the first service. Optionally, the message 3 may include second indication information, and the second indication information may indicate a type of the control plane signaling. For more descriptions of the message 3, refer to S407 in the embodiment shown in FIG. 4. For example, for a manner of carrying the second indication information in the message 3, refer to FIG. 5A or FIG. 5B.

Optionally, the message 3 may further include information about a second network element, and the second network element is a locally disposed function network element configured to process the first service. For example, if the UE obtains the information about the at least one core network element in S706, the UE may determine a function network element configured to process the first service, for example, the second network element. In this case, the UE may add the information about the second network element to the message 3, so that the first network element does not need to perform a process of selecting a local function network element, thereby simplifying implementation of the first network element. The information about the second network element may include an identifier of the second network element, and the identifier of the second network element includes, for example, IP address information or FQDN information of the second network element.

S708: The first network element sends the control plane signaling or a reject message based on the first indication information and/or the fifth indication information. The control plane signaling is, for example, sent to the AMF, the second network element, or a third network element. Both the second network element and the third network element are function network elements configured to process the first service, but the second network element and the third network element are deployed at different locations. The second network element is located in a private network (or is not located in a public network or a central core network), while the third network element is located in the central core network or the public network, or is not located in the private network. The reject message is, for example, sent to the UE, to indicate that processing of the first service is rejected or the first service fails.

Optionally, if the first network element does not receive a local processing rule (for example, including the first indication information and/or the fifth indication information) corresponding to the first service, the first network element may send a reject message to the UE. Optionally, the reject message may indicate a reject cause, for example, indicate that local processing is not allowed, or indicate an identification failure or the like. Alternatively, the first network element may not send a reject message, but send the control plane signaling to the AMF. Because the first network element does not obtain the local processing rule corresponding to the first service, the first network element does not determine whether to perform local processing. If the first network element sends the control plane signaling to the AMF, it is equivalent to that the first network element processes the control plane signaling according to an existing rule. Alternatively, because the first network element does not obtain the local processing rule corresponding to the first service, the first network element may send the control plane signaling to the third network element.

Alternatively, optionally, the control plane signaling is not an MM NAS message, and the message 3 includes the second indication information. For example, the second indication information indicates that the type of the control plane signaling is a location type. The first network element may determine, based on the first indication information and/or the fifth indication information, whether the first service is processed locally, or determine how to forward the control plane signaling. The first network element may obtain the second indication information from the control plane signaling, or obtain the second indication information from the message 3 (not from the control plane signaling).

In addition, optionally, in addition to the control plane signaling, the message 3 may further include other information, for example, first network slice information or a first DNN, indicating that the first service is a service of a network slice corresponding to the first network slice information, or a service corresponding to the first DNN. Then, the first network element can determine, based on the control plane signaling, the service corresponding to the control plane signaling. Further, the first network element may determine, based on the first indication information and/or the fifth indication information, and the first network slice information or the first DNN, whether the first service is processed locally. For example, the message 3 includes the first network slice information. If the first indication information indicates that the service of the network slice corresponding to the first network slice information of the UE is processed locally, the first network element may determine that the first service is processed locally. Alternatively, if the first indication information indicates that the service of the network slice corresponding to the first network slice information of the UE is not processed locally, or the service that can be processed locally and that is indicated by the first indication information does not include the service of the network slice corresponding to the first network slice information, or the fifth indication information indicates that the service of the network slice corresponding to the first network slice information of the UE is not processed locally, the first network element may determine that the first service is not processed locally. If the message 3 includes the first DNN, a processing manner of the first network element is similar thereto.

For example, if the first network element receives the first indication information, and the first indication information indicates that the service corresponding to the UE is processed locally (or indicates that all the services corresponding to the UE are processed locally), the first network element determines that the first service can be processed locally, or sends the control plane signaling to the second network element. Alternatively, if the first indication information includes more content, the first network element may further determine, with reference to other information included in the first indication information, whether the first service can be processed locally, or determine how to forward the control plane signaling. For example, if the first indication information indicates that the service corresponding to the UE is processed locally (or indicates that all the services corresponding to the UE are processed locally), and the first indication information further includes information about an area to which the first indication information is applicable, the first network element may determine a location of the UE (for example, the first network element may initiate positioning on the UE, or the first network element has obtained the location information of the UE in advance). If the UE is currently in the area indicated by the area information, the first network element determines that the first service can be processed locally, or sends the control plane signaling to the second network element. If the UE is currently not in the area indicated by the area information, the first network element determines that the first service cannot be processed locally, or the first network element sends the control plane signaling to the AMF or the third network element to perform the first service by using the public network or the central core network, or the first network element sends a reject message to the UE. Optionally, the reject message may indicate a reject cause, for example, indicate that local processing is not allowed.

For another example, the first network element receives the first indication information, and the first indication information indicates the information about the service locally processed by the UE. For example, if the first indication information includes the information about the service locally processed by the UE, the first network element may determine whether information about the first service is included in the first indication information. If the information about the first service is included in the first indication information, the first network element determines that the first service can be processed locally, or the first network element sends the control plane signaling to the second network element. Alternatively, if the information about the first service is not included in the first indication information, the first network element determines that the first service cannot be processed locally, or the first network element sends the control plane signaling to the AMF or the third network element. Alternatively, if the first indication information includes more content, the first network element may further determine, with reference to other information included in the first indication information, whether the first service can be processed locally, or determine how to forward the control plane signaling. For example, if the first indication information includes the information about the service locally processed by the UE, and the first indication information further includes the information about the area to which the first indication information is applicable, the first network element may determine a location of the UE. If the UE is currently in the area indicated by the area information, and the information about the first service is included in the first indication information, the first network element determines that the first service can be processed locally, or sends the control plane signaling to the second network element. If the UE is currently not in the area indicated by the area information, and/or the information about the first service is not included in the first indication information, the first network element determines that the first service cannot be processed locally, or the first network element sends the control plane signaling to the AMF or the third network element.

For another example, if the first network element receives the first indication information and the fifth indication information, the first indication information indicates the information about the service locally processed by the UE, and the fifth indication information indicates the information about the service not locally processed by the UE, the first network element may determine whether the information about the first service is included in the first indication information or the fifth indication information. If the information about the first service is included in the first indication information, the first network element determines that the first service can be processed locally, or the first network element sends the control plane signaling to the second network element. Alternatively, if the information about the first service is included in the fifth indication information, the first network element determines that the first service cannot be processed locally, or the first network element sends the control plane signaling to the AMF or the third network element. Alternatively, if the first indication information or the fifth indication information includes more content, the first network element may further determine, with reference to other information included in the first indication information or the fifth indication information, whether the first service can be processed locally, or determine how to forward the control plane signaling. For example, if the first indication information includes the information about the service locally processed by the UE, and the first indication information further includes the information about the area to which the first indication information is applicable, the first network element may determine a location of the UE. If the UE is currently in the area indicated by the area information, and the information about the first service is included in the first indication information, the first network element determines that the first service can be processed locally, or sends the control plane signaling to the second network element. If the UE is currently not in the area indicated by the area information, and/or the information about the first service is not included in the first indication information, the first network element determines that the first service cannot be processed locally, or the first network element sends the control plane signaling to the AMF or the third network element. For another example, if the fifth indication information includes the information about the service not locally processed by the UE, and the fifth indication information further includes information about an area to which the fifth indication information is applicable, the first network element may determine a location of the UE. If the UE is currently in the area indicated by the area information, and the information about the first service is included in the fifth indication information, the first network element determines that the first service cannot be processed locally, or sends the control plane signaling to the AMF or the third network element. If the UE is currently not in the area indicated by the area information, and/or the information about the first service is not included in the fifth indication information, the first network element determines that the first service can be processed locally, or the first network element sends the control plane signaling to the second network element, or the first network element cannot determine whether the first service can be processed locally, or the first network element sends a reject message to the UE.

For another example, if the first network element receives the fifth indication information, and the fifth indication information indicates that the service corresponding to the UE is not processed locally (or indicates that all the services corresponding to the UE are not processed locally), the first network element determines that the first service cannot be processed locally, or sends the control plane signaling to the AMF or the third network element. Alternatively, if the first indication information includes more content, the first network element may further determine, with reference to other information included in the first indication information, whether the first service cannot be processed locally, or determine how to forward the control plane signaling. For example, if the fifth indication information indicates that the service corresponding to the UE is not processed locally (or indicates that all the services corresponding to the UE are not processed locally), and the fifth indication information further includes the information about the area to which the fifth indication information is applicable, the first network element may determine a location of the UE. If the UE is currently in the area indicated by the area information, the first network element determines that the first service cannot be processed locally, or sends the control plane signaling to the AMF or the third network element. If the UE is currently not in the area indicated by the area information, the first network element determines that the first service is processed locally, or the first network element sends the control plane signaling to the second network element, or the first network element cannot determine whether the first service is processed locally, or the first network element sends a reject message to the UE.

If the first indication information further includes more content, the first network element may further determine, with reference to the more content, whether the first service can be processed locally, or determine how to forward the control plane signaling. Details are not described.

If the first network element determines whether the first service can be processed locally, or determines whether the first service is processed locally or not, S708 may include step a and step b. Step a: The first network element determines, based on the first indication information, whether the first service is processed locally, or not. Step b: The first network element sends the control plane signaling (the control plane signaling is sent to the second network element, the AMF, or the third network element) or the reject message (for example, sent to the UE) based on a determining result. Alternatively, if the first network element determines how to forward the first service, it may be considered that S708 includes only one step: The first network element sends the control plane signaling or the reject message based on the first indication information and/or the fifth indication information.

Optionally, the message 3 may further include the information about the second network element. In this case, the first network element does not need to perform a process of selecting a local function network element. For example, if the first service is a location service, and the message 3 includes an ID of the LMF, the first network element may send the control plane signaling to the LMF. For another example, if the first service is a session service, and the message 3 includes an ID of the SMF, the first network element may send the control plane signaling to the SMF.

Alternatively, the message 3 does not include the information about the second network element, but the first network element needs to send the control plane signaling to a local function network element. In this case, the first network element may autonomously select a function network element. For example, if the first indication information indicates the function network element configured to process the locally processed service, and the first indication information also indicates that the first service is a locally processed service, the first network element may determine, based on the first indication information, a function network element configured to process the first service, for example, the second network element.

Optionally, the message 3 may further include information about the third network element. In this case, even if the first service is not processed locally, the first network element does not need to perform a process of selecting a function network element. Alternatively, the message 3 does not include the information about the third network element. In this case, the first network element may select a function network element configured to process the first service. The function network element is located in the public network or the central core network.

In this embodiment of this application, the AMF may determine, based on the first information, whether the service corresponding to the UE is processed locally. Therefore, a method for determining whether the service of the UE can be processed locally is provided, so that the service of the UE can be processed locally. In addition, if the service of the UE is processed locally, the AMF may further send corresponding indication information to the first network element, so that the first network element can process the service of the UE according to a local processing mechanism, thereby implementing the local processing mechanism. Because the service of the UE can be processed locally, in a processing process, control plane signaling of the UE may not pass through the AMF, but may be sent by the first network element to a local function network element. Therefore, a roundabout transmission process of the signaling is reduced, and a transmission delay is reduced. In addition, the UE in this embodiment of this application does not need to have a high capability, and a requirement on the UE is low, which helps to expand an application scope of this embodiment of this application.

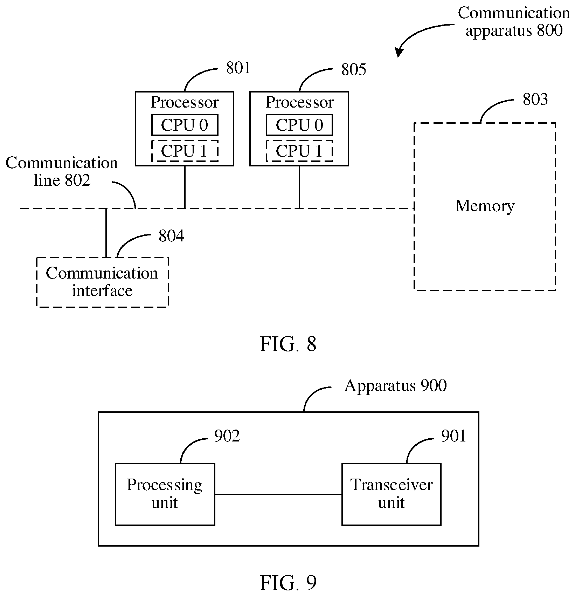

FIG. 8 is a diagram of a structure of a communication apparatus according to an embodiment of this application. The communication apparatus 800 may be the first UE in the embodiment shown in any one of FIG. 4, FIG. 6, or FIG. 7 or a circuit system of the first UE, and is configured to implement the method corresponding to the first UE in the foregoing method embodiments. Alternatively, the communication apparatus 800 may be the first network element in the embodiment shown in any one of FIG. 4, FIG. 6, or FIG. 7 or a circuit system of the first network element, and is configured to implement the method corresponding to the first network element in the foregoing method embodiments. Alternatively, the communication apparatus 800 may be the AMF in the embodiment shown in any one of FIG. 4, FIG. 6, or FIG. 7 or a circuit system of the AMF, and is configured to implement the method corresponding to the AMF in the foregoing method embodiments. For example, the circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, which may be located at different physical locations, or may be located on different integrated circuits. Optionally, different processors may be integrated into one or more processors, for example, integrated into one or more integrated circuits.

Optionally, the communication apparatus 800 includes one or more memories 803 to store instructions. Optionally, the memory 803 may further store data. The processor and the memory may be separately disposed, or may be integrated together.

Optionally, the communication apparatus 800 includes a communication line 802 and at least one communication interface 804. The memory 803, the communication line 802, and the communication interface 804 are all optional, and therefore are all represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement receiving and sending functions of the communication apparatus 800 by using the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 801 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 802 may include a path on which information is transferred between the foregoing components.

The communication interface 804 is configured to communicate, by using any apparatus such as a transceiver, with another device or a communication network, for example, an Ethernet, a radio access network (radio access network, RAN), a wireless local area network (wireless local area network, WLAN), or a wired access network.

The memory 803 may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, and a blue-ray disc, or the like), a magnetic disk storage medium or another magnetic storage device, or any other medium that can be used to carry or store expected program code in an instruction or data structure form and that can be accessed by a computer. The memory 803 may exist independently, and is connected to the processor 801 by using the communication line 802. Alternatively, the memory 803 may be integrated with the processor 801.

The memory 803 is configured to store computer-executable instructions for executing the solutions of this application, and the processor 801 controls execution. The processor 801 is configured to execute the computer-executable instructions stored in the memory 803, to implement steps performed by the first UE, the first network element, or the AMF in the embodiment shown in any one of FIG. 4, FIG. 6, or FIG. 7.

Optionally, the computer-executable instructions in embodiments of this application may also be referred to as application program code. This is not specifically limited in embodiments of this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of the first UE, a chip of the first network element, or a chip of the AMF, the chip includes the processor 801 (and may further include the processor 805), the communication line 802, and the communication interface 804. Optionally, the chip may include the memory 803. Specifically, the communication interface 804 may be an input interface, a pin, a circuit, or the like. The memory 803 may be a register, a buffer, or the like. The processor 801 and the processor 805 may be a general-purpose CPU, a microprocessor, an ASIC, or one or more integrated circuits configured to control program execution of the communication method in any one of the foregoing embodiments.

In embodiments of this application, an apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, the module division in embodiments of this application is an example, and is merely logical function division. There may be another division manner during actual implementation. For example, for a case in which each functional module is obtained through division based on each corresponding function, FIG. 9 shows a diagram of an apparatus. The apparatus 900 may be the first UE or the second UE in the foregoing method embodiments, or a chip in the first UE, a chip in the first network element, or a chip in the AMF. The apparatus 900 includes a processing unit 902 and a transceiver unit 901.

It should be understood that, the apparatus 900 may be configured to implement steps performed by the first UE, the first network element, or the AMF in the communication method in embodiments of this application. For related features, refer to the embodiment shown in any one of FIG. 4, FIG. 6, or FIG. 7. Details are not described herein again.

Optionally, functions/implementation processes of the transceiver unit 901 and the processing unit 902 in FIG. 9 may be implemented by the processor 801 in FIG. 8 by invoking the computer-executable instructions stored in the memory 803. Alternatively, the function/implementation process of the processing unit 902 in FIG. 9 may be implemented by the processor 801 in FIG. 8 by invoking the computer-executable instructions stored in the memory 803, and the function/implementation process of the transceiver unit 901 in FIG. 9 may be implemented by the communication interface 804 in FIG. 8.

Optionally, when the apparatus 900 is a chip or a circuit, the function/implementation process of the transceiver unit 901 may alternatively be implemented by a pin, a circuit, or the like. Optionally, the transceiver unit 901 may include a sending unit and/or a receiving unit. The sending unit is configured to implement a sending function, and the receiving unit is configured to implement a receiving function. Alternatively, the transceiver unit 901 may be an integral module that can implement the sending function and/or the receiving function. Optionally, the transceiver unit 901 may be implemented by a transceiver.

This application further provides a computer-readable storage medium. The computer-readable storage medium stores a computer program or instructions. When the computer program or the instructions are run, the method performed by the first UE, the first network element, or the AMF in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is enabled to perform the method performed by the first UE, the first network element, or the AMF in any one of the foregoing method embodiments.

An embodiment of this application further provides a processing apparatus, including a processor and an interface. The processor is configured to perform the method performed by the first UE, the first network element, or the AMF in any one of the foregoing method embodiments.

The foregoing embodiments may be all or partly implemented by using software, hardware, firmware, or any combination thereof. When software is used for implementation, the embodiments may be all or partly implemented in a form of a computer program product. The computer program product includes one or more computer instructions. When the computer program instructions are loaded and executed on a computer, the procedures or functions according to embodiments of this application are all or partly generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, a controller, a microcontroller, or a state machine. Alternatively, the processor may be implemented by a combination of computing apparatuses, such as a digital signal processor and a microprocessor, a plurality of microprocessors, one or more microprocessors and a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or any other form of storage medium in the art. For example, the storage medium may be connected to a processor, so that the processor may read information from the storage medium and write information to the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different parts of the terminal device.

These computer program instructions may alternatively be loaded onto a computer or another programmable data processing device, so that a series of operations or steps are performed on the computer or the another programmable device, to generate computer-implemented processing. Therefore, the instructions executed on the computer or the another programmable device provide steps for implementing a specified function in one or more procedures in the flowcharts and/or one or more blocks in the block diagrams.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that, in embodiments of this application, the first UE and/or the first network element and/or the AMF may perform a part of or all steps in embodiments of this application. These steps or operations are merely examples. In embodiments of this application, other operations or various operation variants may be further performed. In addition, the steps may be performed in an order different from those presented in embodiments of this application, and not all operations in embodiments of this application need to be performed.

## Claims

1. A communication method, applied to a first core network element, wherein the method comprises:
determining, based on first information, that a service corresponding to a terminal device is processed locally, wherein control plane signaling corresponding to the locally processed service is forwarded by a first network element to a local function network element without passing through the first core network element, and the first information comprises one or more of the following: information about the terminal device, information about the first network element, or information about at least one core network element; and
sending indication information to the first network element, wherein the indication information indicates that the service corresponding to the terminal device is processed locally, or indicates information about the service locally processed by the terminal device.

2. The method according to claim 1, wherein
the service corresponding to the terminal device comprises all or a part of services of the terminal device; or
a service request from the terminal device is received, and the service corresponding to the terminal device is a service indicated by the service request.

3. The method according to claim 1 or 2, wherein the information about the terminal device comprises one or more of the following:
capability information of the terminal device in supporting local service processing;
location information of the terminal device;
a public land mobile network PLMN and/or a network identification NID accessed by the terminal device; or
information about a service that the terminal device is allowed to process locally, or information indicating that the terminal device is allowed to process all the services locally.

4. The method according to any one of claims 1 to 3, wherein the information about the first network element comprises information about whether the first network element supports message forwarding to a local function network element.

5. The method according to any one of claims 1 to 4, wherein the determining, based on the first information, that the service corresponding to the terminal device is processed locally comprises:
sending a part of or all the first information to a second core network element; and
receiving the indication information from the second core network element.

6. The method according to any one of claims 1 to 5, wherein the indication information further indicates a function network element configured to process the locally processed service, and/or an area to which the indication information is applicable.

7. The method according to any one of claims 1 to 6, wherein the method further comprises:
sending policy information to the terminal device, wherein the policy information indicates that the service corresponding to the terminal device is processed locally, or indicates the information about the service locally processed by the terminal device.

8. The method according to claim 7, wherein the policy information further comprises information about the function network element configured to process the service locally processed by the terminal device, and/or information about an area to which the policy information is applicable.

9. The method according to claim 7 or 8, wherein
the policy information is generated by the first core network element; or
the policy information is from the second core network element.

10. The method according to any one of claims 1 to 9, wherein the method further comprises:
sending the information about the first network element and/or the information about the at least one core network element to the terminal device, wherein the information about the first network element and/or the information about the at least one core network element are/is used by the terminal device to determine whether the service corresponding to the terminal device is processed locally.

11. A communication method, applied to a first network element, wherein the method comprises:
receiving first indication information from a first core network element, wherein the first indication information indicates that a service corresponding to a terminal device is processed locally, or indicates information about the service locally processed by the terminal device;
receiving a message from the terminal device, wherein the message comprises control plane signaling; and
sending the control plane signaling to a local function network element based on the first indication information, wherein the control plane signaling does not pass through the first core network element, and the control plane signaling corresponds to a locally processed service.

12. The method according to claim 11, wherein the message comprises second indication information, and the second indication information is information indicating a service requested by the control plane signaling, or information indicating a type of the control plane signaling, or information indicating a local service.

13. The method according to claim 11 or 12, wherein the first indication information further indicates a function network element configured to process the locally processed service, and/or an area to which the first indication information is applicable.

14. The method according to any one of claims 11 to 13, wherein
the local function network element is determined based on information about the local function network element comprised in the message; or
the local function network element is determined based on the first indication information, and the first indication information further indicates information about the function network element configured to process the locally processed service.

15. A communication method, applied to a terminal device, wherein the method comprises:
sending a message to a first network element, wherein the message comprises control plane signaling, wherein
the message comprises indication information, and the indication information is information indicating a service requested by the control plane signaling, or information indicating a type of the control plane signaling, or information indicating a local service.

16. The method according to claim 15, wherein the method further comprises:
receiving policy information from a first core network element, wherein the policy information indicates that a service corresponding to the terminal device is processed locally, or indicates information about the service locally processed by the terminal device.

17. The method according to claim 16, wherein the sending the message to the first network element comprises:
sending the message when determining, based on the policy information, that the service requested by the control plane signaling is processed locally.

18. The method according to claim 16, wherein the method further comprises:
sending an MM NAS message to the first network element when determining, based on the policy information, that a first service is not processed locally, wherein the MM NAS message comprises a service request of the first service.

19. The method according to claim 15, wherein the method further comprises:
sending a service request to the first network element, wherein the service request is used to request to locally process the service requested by the control plane signaling; and
receiving response information, wherein the response information indicates that the service requested by the control plane signaling is processed locally.

20. The method according to claim 19, wherein the method further comprises:
receiving information about the first network element and/or information about at least one core network element from a first core network element, wherein the information about the first network element and/or the information about the at least one core network element are/is used by the terminal device to determine whether a service corresponding to the terminal device is processed locally.

21. The method according to claim 20, wherein the sending the service request to the first network element comprises:
sending the service request to the first network element based on the information about the first network element and/or the information about the at least one core network element.

22. The method according to any one of claims 15 to 21, wherein the policy information further indicates a local function network element configured to process the first service; and
the message further comprises information indicating the local function network element configured to process the first service.

23. The method according to any one of claims 15 to 22, wherein the policy information further indicates an area to which the policy information is applicable, and the sending the message to the first network element comprises:
sending the message to the first network element when the terminal device is in the area.

24. A communication apparatus, wherein the communication apparatus comprises a processing unit and a transceiver unit, and the processing unit is coupled to the transceiver unit, to perform the method according to any one of claims 1 to 10, or the method according to any one of claims 11 to 14, or the method according to any one of claims 15 to 23.

25. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 10, or the method according to any one of claims 11 to 14, or the method according to any one of claims 15 to 23.

26. A computer-readable storage medium, wherein the computer-readable storage medium is configured to store a computer program, and when the computer program is run on a computer, the computer is enabled to perform the method according to any one of claims 1 to 10, or the method according to any one of claims 11 to 14, or the method according to any one of claims 15 to 23.

27. A computer program product, wherein the computer program product comprises a computer program, and when the computer program is run on a computer, the computer is enabled to perform the method according to any one of claims 1 to 10, or the method according to any one of claims 11 to 14, or the method according to any one of claims 15 to 23.

28. A chip system, wherein the chip system comprises:
a processor and an interface, wherein the processor is configured to invoke instructions from the interface and run the instructions, and when the processor executes the instructions, the method according to any one of claims 1 to 10 is implemented, or the method according to any one of claims 11 to 14 is implemented, or the method according to any one of claims 15 to 23 is implemented.

29. A communication system, wherein the communication system comprises a first core network element and a first network element, wherein
the first core network element is configured to perform the method according to any one of claims 1 to 10; and
the first network element is configured to perform the method according to any one of claims 11 to 14.

30. The communication system according to claim 29, wherein the communication system further comprises a terminal device, wherein
the terminal device is configured to perform the method according to any one of claims 15 to 23.
